(19) Europäisches Patentamt
European Patent Office
Office européen des brevets

(11) **EP 3 660 778 A1**

(12) **EUROPEAN PATENT APPLICATION**
published in accordance with Art. 153(4) EPC

(43) Date of publication:
**03.06.2020 Bulletin 2020/23**

(51) Int Cl.:
*G06Q 50/10* (2012.01)     *G06Q 10/10* (2012.01)

(21) Application number: **18838668.4**

(86) International application number:
**PCT/JP2018/023951**

(22) Date of filing: **25.06.2018**

(87) International publication number:
**WO 2019/021715 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2017   JP 2017144136**

(71) Applicant: **Sony Corporation**
**Tokyo 108-0075 (JP)**

(72) Inventors:
• **KAWAMOTO, Yohei**
**Tokyo 108-0075 (JP)**
• **TADA, Kenta**
**Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING SYSTEM, INFORMATION PROCESSING METHOD, AND PROGRAM**

(57)   Value of data D based on a data value examination criterion C is determined through secure calculation without input data D and the data value examination criterion C being disclosed to each other. Secure calculation is executed without a data providing device disclosing the input data D to a data collecting device, and further, without a data collecting device disclosing the data value examination criterion C to the data providing device. The data providing device generates one piece of distributed information rp of a data value index value which is a calculation value of a data value calculation function f(D, C) of the input data D through secure calculation and calculates the data value index value through operation of the generated distributed information rp and another piece of distributed information rc of the data value index value received from the data collecting device.

*FIG. 13*

**Description**

TECHNICAL FIELD

The present disclosure relates to an information processing device, an information processing system, an information processing method, and a program. More particularly, the present disclosure relates to an information processing device, an information processing system, an information processing method, and a program for acquiring an operation result to which secure data is applied without disclosing secure data for which publication is restricted.

BACKGROUND ART

In recent years, communication via a network such as the Internet is actively performed, and an amount of communication data keeps increasing.
These kinds of communication data include various kinds of communication information such as personal information of an enormous number of users, location information, and, further, commodity trading information.
These kinds of communication information also include user information that a user does not desire to disclose, such as, for example, age, address, a health state, hobby, preference, and purchased products of the user.
However, these kinds of user information are information useful for a specific service provider, for example, a product seller who sells a certain product, or a business operator such as an insurance service provider, a tourist service provider, and a medical information provider to specify a user who could be a customer.
A market in which such various kinds of user information are collected and provided to business operators for a fee is referred to as a data trading market, and has attracted attention in recent years.
The data trading market is, for example, service which matches an individual (user) who desires to provide data with a provider which desires to utilize the data.
As prior art which discloses a technology relating to this data trading market, for example, there is Patent Document 1 (Japanese Patent Application Laid-Open No. 2002-042012).
Patent Document 1 discloses a configuration where personal data is collected from individuals to create a database, this database is provided to a data user, and profits obtained as a result are paid to the individuals in return.
A data collector desires to recognize value of data of a data provider in advance to maximize earnings obtained by utilization or reselling of the data. However, the configuration disclosed in Patent Document 1 is a scheme in which data is collected from the data provider, and after the collected data is resold and profits are generated, return is provided to the data provider.
In this scheme, data provided by the data provider is highly likely to be unutilized, and it is wasteful for the data collector to collect such data which is not utilized. Further, this scheme has a disadvantage for the data provider because a risk of leakage of personal information of the data provider increases by the data being provided to the data collector which is a third person.
Further, Patent Document 2 (Japanese Patent Application Laid-Open No. 2013-164724) discloses a configuration for reducing a risk of leakage of personal information which is a disadvantage of the above-described Patent Document 1 and preventing damage of value of data. This Patent Document 2 discloses a scheme in which a data provider such as, for example, an individual provides information (answer) generated from data to a data collector without providing data itself such as personal information to the collector.
For example, the data collector transmits a query (question) to the provider. The data provider generates an answer (response) to the query on the basis of personal information and provides the generated answer to the data collector.
For example, in response to a query of "are you a teenager?", in a case where the user is 18 years old, the answer = Yes is returned.
By utilizing such a query-answer scheme, it is not necessary for the user to disclose personal information of 18 years old.
However, even in a case where this query-answer scheme is utilized, some kinds of information regarding data of the provider are left in the answer portion. Further, also for the collector, there is a problem that it is necessary to transmit a query to the provider every time data is used, which requires communication cost.
Further, Patent Document 3 (Japanese Patent Application Laid-Open No. 2015-103111) discloses an invention regarding a method, a device and a program for calculating value of user information and paying for the user information.
While this Patent Document 3 includes a system which determines value of user information, also in a case where this system is utilized, because a data provider requires to provide data to a data collector once, there is a problem of increase in a risk of the data being diverted, and a risk of leakage of privacy information.

CITATION LIST

PATENT DOCUMENT

Patent Document 1: Japanese Patent Application Laid-Open No. 2002-042012
Patent Document 2: Japanese Patent Application Laid-Open No. 2013-164724
Patent Document 3: Japanese Patent Application Laid-Open No. 2015-103111

NON-PATENT DOCUMENT

Non-Patent Document 1: O. Goldreich, S. Micali and A. Wigderson. How to play any mental game. STOC'87, pp. 218-229, 1987

SUMMARY OF THE INVENTION

PROBLEMS TO BE SOLVED BY THE INVENTION

The present disclosure has been made in view of, for example, the above-described problems, and is directed to providing an information processing device, an information processing system, an information processing method, and a program which enable examination as to whether or not data of a data provider is data which a data collector desires to utilize to be executed without the data and an examination criterion being disclosed to each other.

SOLUTIONS TO PROBLEMS

A first aspect of the present disclosure is an information processing device including:

a data processing unit configured to calculate data value of input data D based on a data value examination criterion C; and
a communication unit configured to execute communication with a communication partner device,
in which the data processing unit includes
a secure calculation processing unit configured to execute secure calculation of calculating the data value of the input data D without disclosing the input data D to the communication partner device and without receiving the data value examination criterion C from the communication partner device,
the secure calculation processing unit
generates distributed information Dc which is converted data of the input data D and transmits the distributed information Dc to the communication partner device,
receives input of distributed information Cp which is converted data of the data value examination criterion C from the communication partner device, and
executes secure calculation accompanied by communication with the communication partner device to acquire a data value index value which is a calculation result of a data value calculation function f(D, C) of the input data D.

Further, a second aspect of the present disclosure is an information processing device including: a storage unit configured to store a data value examination criterion C; and
a communication unit configured to execute communication with a communication partner device,
in which the data processing unit includes
a secure calculation processing unit configured to execute secure calculation of calculating data value of input data D without disclosing the data value examination criterion C to the communication partner device and without receiving the input data D at the communication partner device from the communication partner device, and
the secure calculation processing unit
generates distributed information Cp which is converted data of the data value examination criterion C and transmits the distributed information Cp to the communication partner device,
receives input of distributed information Dc which is converted data of the input data D, from the communication partner device, and
executes secure calculation accompanied by communication with the communication partner device to generate distributed information rc for acquiring a data value index value which is a calculation result of a data value calculation function f(D, C) of the input data D, and transmits the distributed information rc to the communication partner device.

Further, a third aspect of the present disclosure is

an information processing system which is a data processing system including a data providing device and a data collecting device which are able to perform communication with each other,

the data collecting device

generating distributed information rc for acquiring a data value index value which is a calculation result of a data value calculation function f(D, C) of input data D without disclosing a data value examination criterion C to the data providing device and without receiving the input data D at the data providing device from the data providing device, and transmitting the distributed information rc to the data providing device,

the data providing device

generating distributed information rp for acquiring the data value index value which is the calculation result of the data value calculation function f(D, C) of the input data D without disclosing the input data D to the data collecting device and without receiving the data value examination criterion C from the data collecting device, and

calculating the data value index value through operation processing in which the generated distributed information rp and the distributed information rc received from the data collecting device are applied.

Further, a fourth aspect of the present disclosure is

an information processing method to be executed at an information processing device,

the information processing device including:

a data processing unit configured to calculate data value of input data D based on a data value examination criterion C; and

a communication unit configured to execute communication with a communication partner device,

in which the data processing unit

includes a secure calculation processing unit configured to execute secure calculation of calculating the data value of the input data D without disclosing the input data D to the communication partner device and without receiving the data value examination criterion C from the communication partner device,

the secure calculation processing unit

generates distributed information Dc which is converted data of the input data D and transmits the distributed information Dc to the communication partner device,

receives input of distributed information Cp which is converted data of the data value examination criterion C, from the communication partner device, and

executes secure calculation accompanied by communication with the communication partner device to acquire a data value index value which is a calculation result of a data value calculation function f(D, C) of the input data D.

Further, a fifth aspect of the present disclosure is

an information processing method to be executed at an information processing device,

the information processing device including:

a storage unit configured to store a data value examination criterion C; and

a communication unit configured to execute communication with a communication partner device,

in which the data processing unit includes

a secure calculation processing unit configured to execute secure calculation of calculating data value of input data D without disclosing the data value examination criterion C to the communication partner device and without receiving the input data D at the communication partner device from the communication partner device, and

the secure calculation processing unit

generates distributed information Cp which is converted data of the data value examination criterion C and transmits the distributed information Cp to the communication partner device,

receives input of distributed information Dc which is converted data of the input data D, from the communication partner device, and

executes secure calculation accompanied by communication with the communication partner device to generate distributed information rc for acquiring a data value index value which is a calculation result of a data value calculation function f(D, C) of the input data D and transmits the distributed information rc to the communication partner device.

Further, a sixth aspect of the present disclosure is

a program for causing information processing to be executed at an information processing device,

the information processing device including:

a data processing unit configured to calculate data value of input data D based on a data value examination criterion C; and

a communication unit configured to execute communication with a communication partner device,

in which the data processing unit includes

a secure calculation processing unit configured to execute secure calculation of calculating data value of the input data D without disclosing the input data D to the communication partner device and without receiving the data value examination criterion C from the communication partner device,
the program causes the secure calculation processing unit to execute:

processing of generating distributed information Dc which is converted data of the input data D and transmitting the distributed information Dc to the communication partner device;
processing of receiving input of distributed information Cp which is converted data of the data value examination criterion C, from the communication partner device; and
processing of executing secure calculation accompanied by communication with the communication partner device to acquire a data value index value which is a calculation result of a data value calculation function f(D, C) of the input data D.

Further, a seventh aspect of the present disclosure is
a program for causing information processing to be executed at an information processing device,
the information processing device including:

a storage unit configured to store a data value examination criterion C; and
a communication unit configured to execute communication with a communication partner device,
in which the data processing unit includes
a secure calculation processing unit configured to execute secure calculation of calculating data value of input data D without disclosing the data value examination criterion C to the communication partner device and without receiving the input data D at the communication partner device from the communication partner device, and
the program causes the secure calculation processing unit to execute:

processing of generating distributed information Cp which is converted data of the data value examination criterion C and transmitting the distributed information Cp to the communication partner device;
processing of receiving input of distributed information Dc which is converted data of the input data D, from the communication partner device; and
processing of executing secure calculation accompanied by communication with the communication partner device to generate distributed information rc for acquiring a data value index value which is a calculation result of a data value calculation function f(D, C) of the input data D and transmitting the distributed information rc to the communication partner device.

Note that the program according to the present disclosure is recorded in a recording medium, for example, and is provided to an information processing device or a computer system that can execute various program codes, for example. By executing such a program by a program executing unit on the information processing device or the computer system, processing according to the program is realized.

The object, features, and advantages of the present disclosure will be made clear later by a more detailed explanation that is based on the examples of the present disclosure described later and the appended drawings. Furthermore, the system in the present specification is a logical set configuration of a plurality of devices and is not limited to a case in which each configuration is in the same casing.

EFFECTS OF THE INVENTION

According to a configuration in one example of the present disclosure, a configuration where value based on a data value examination criterion C of data D is determined through secure calculation without the input data D and the data value examination criterion C being disclosed to each other is realized.

Specifically, for example, secure calculation is executed without a data providing device disclosing the input data D to a data collecting device, and further, without the data collecting device disclosing the data value examination criterion C to the data providing device. The data providing device generates one piece of distributed information rp of a data value index value which is a calculation value of a data value calculation function f(D, C) of the input data D through secure calculation and calculates the data value index value through operation of the generated distributed information rp and another piece of distributed information rc of the data value index value received from the data collecting device.

According to the present configuration, a configuration where value based on a data value examination criterion C of data D is determined through secure calculation without the input data D and the data value examination criterion C being disclosed to each other, is realized.

In addition, the effects described in the present specification are not limiting but are merely examples, and there may be additional effects.

BRIEF DESCRIPTION OF DRAWINGS

Fig. 1 is a view explaining an example and the processing of an information processing system which executes processing of the present disclosure.

Fig. 2 is a view illustrating an example of a user interface (UI) for data input processing at a data providing device.

Fig. 3 is a view explaining an example and the processing of the information processing system which executes the processing of the present disclosure.

Fig. 4 is a view explaining data provided by the data providing device and a determination example of data value at a data collecting device.

Fig. 5 is a view explaining an example of secure calculation to be executed at the data providing device and the data collecting device.

Fig. 6 is a view explaining an example of secure calculation to be executed at the data providing device and the data collecting device.

Fig. 7 is a view explaining an example of addition result calculation processing of secure data through secure calculation.

Fig. 8 is a view explaining an example of multiplication result calculation processing of the secure data through secure calculation.

Fig. 9 is a view explaining a configuration example of the data providing device.

Fig. 10 is a view explaining a configuration example of the data collecting device.

Fig. 11 is a view explaining an example of a data value examination criterion.

Fig. 12 is a view explaining an example of the data value examination criterion.

Fig. 13 is a view explaining a sequence of processing to be executed at the data providing device and the data collecting device.

Fig. 14 is a view explaining an example of an examination request access log stored in a storage unit of the data collecting device.

Fig. 15 is a view explaining a sequence of processing to be executed at the data providing device and the data collecting device.

Fig. 16 is a view explaining a sequence of processing to be executed at the data providing device and the data collecting device.

Fig. 17 is a view explaining a configuration example of the data providing device.

Fig. 18 is a view explaining a configuration example of the data collecting device.

Fig. 19 is a view illustrating a hardware configuration example of an information processing device.

MODE FOR CARRYING OUT THE INVENTION

Hereinafter, an information processing device, an information processing system, an information processing method, and a program according to the present disclosure will be described in detail with reference to the drawings. The following items will be described.

1. Configuration example of system to which processing of the present disclosure can be applied

2. Secure calculation to be executed in information processing system of the present disclosure

3. Outline of secure calculation

4. Configuration and processing of information processing device

5. Sequence of data processing to be executed between data providing device and data collecting device

6. Configuration for preventing overlapped access from data providing device

7. Processing sequence in configuration to which a plurality of data value examination criteria is applied

8. Device configuration set so as to execute updating of data value examination criterion

9. Hardware configuration example of information processing device

10. Summary of configuration of the present disclosure

[1. Configuration example of information processing system to which processing of the present disclosure can be applied]

First, a configuration example of an information processing system to which processing of the present disclosure can be applied will be described.

As described above, in recent years, communication via a network such as the Internet is actively performed, and these kinds of communication data include personal information of an enormous number of users, for example, various kinds of information such as age, address, health states, hobbies, preference, and purchased products of users.

These kinds of user information are information useful for a specific service provider, for example, a product seller who sells a certain product, or a business operator such as an insurance service provider, a tourist service provider and a medical information provider to specify a user who could be a customer.

A market in which such various kinds of user information are collected and provided to business operators for a fee is referred to as a data trading market.

The data trading market is, for example, service which matches an individual (user) who desires to provide data with a provider which desires to utilize the data.

Elements of the data trading market can be classified into, for example, the following three groups.

(1) A data provider such as an individual who provides data
(2) A data collector such as a business operator who collects data provided from the data provider
(3) A data user such as a business operator who acquires and utilizes data collected by the data collector

Note that data transmission and reception and data processing in the data trading market are performed by devices which are utilized by the above-described respective elements. Devices to be utilized in the data trading market can be also classified into the following three types.

(1) A data providing device (such as a PC, a smartphone, a mobile phone, and a television) which is utilized by the data provider
(2) A data collecting device (such as a data collecting server) which is utilized by the data collector
(3) A data utilizing device (such as a PC, a data processing server and a computer system) which is utilized by the data user

Outline of processing to be performed in the data trading market constituted by these respective elements will be described below.

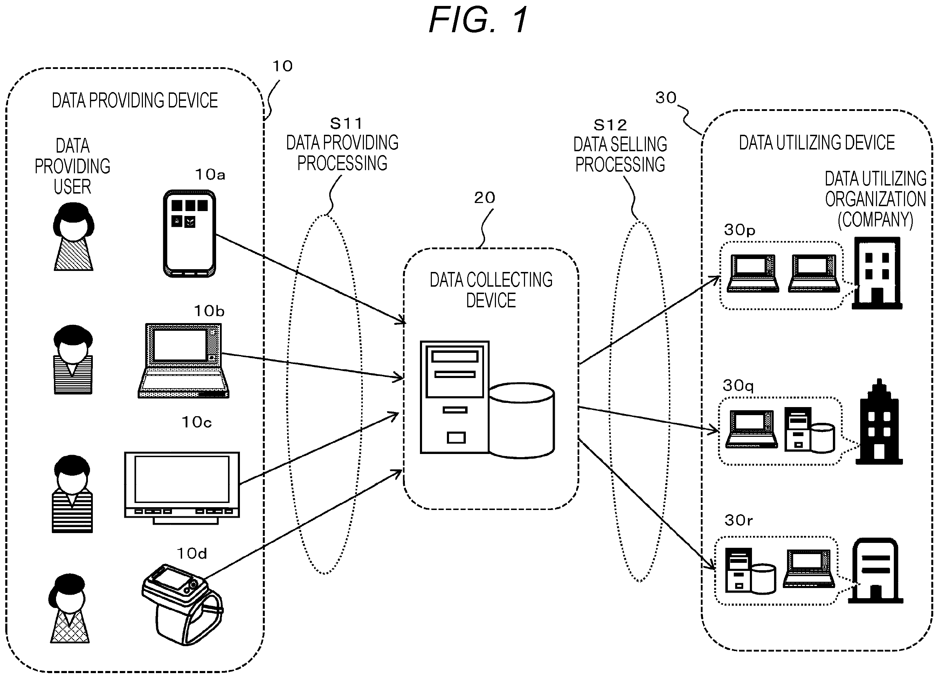

Fig. 1 is a view explaining outline of a configuration and processing of data providing processing from a data provider who utilizes the data trading market to a data collector, and data selling processing from the data collector to a data user.

Fig. 1 shows the following devices to be utilized in the data trading market.

(1) A data providing device 10 (such as a PC, a smartphone, a mobile phone, and a television) which is utilized by the data provider
(2) A data collecting device 20 (such as a data collecting server) which is utilized by the data collector
(3) A data utilizing device 30 (such as a PC, a data processing server and a computer system) which is utilized by the data user

The data providing device 10 is utilized by a data providing user, and the data providing user inputs various kinds of data to the data providing device 10.

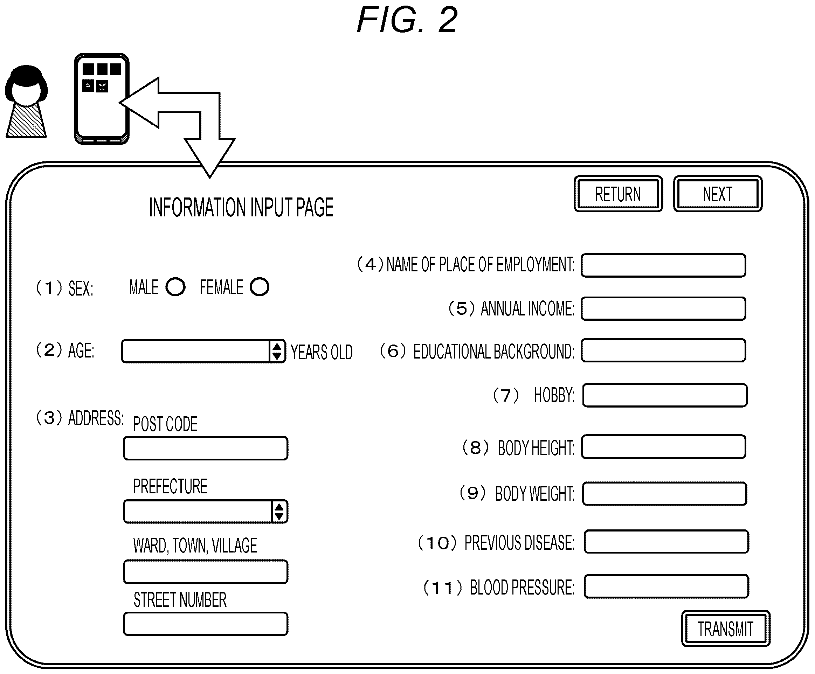

An example of data to be input by the data providing user to the data providing device 10 is illustrated in Fig. 2.

Fig. 2 is an example where a data input screen (UI: user interface) is displayed at the data providing device 10 which is utilized by the data providing user.

In the example illustrated in Fig. 2, input information, that is, provided data is (1) sex, (2) age, (3) address, (4) place of employment, (5) annual income, (6) educational background, (7) hobby, (8) body height, (9) body weight, (10) previous disease, and (11) blood pressure.

These kinds of information include personal information, and include information that the data providing user does not desire to disclose.

The data collecting device 20, for example, provides the UI illustrated in Fig. 2 to the data providing device 10 which is a user terminal to be utilized by a number of users. The user inputs various kinds of information by utilizing this UI.

However, if this input data is transmitted to the data collecting device 20 as is, personal information of each user is acquired by the data collecting device 20, and, if a management structure of the data collecting device 20 thereafter is insufficient, there is a possibility that the personal information may leak out.

In the processing of the present disclosure, to prevent such leakage of information, the data providing device 10 executes predetermined calculation (secure calculation) based on user input data and transmits the calculation result to the data collecting device 20 via a network such as, for example, the Internet.

This processing is data providing processing in step S11 illustrated in Fig. 1.

Specific processing will be described later.

The data collecting device 20 performs data analysis processing such as forming and processing on data collected from the data providing device 10, that is, the above-described calculation (secure calculation) result data, and creates a database in which the analyzed data is stored. Further, the data collecting device 20 sells the data stored in the database to a data user such as various kinds of service providing companies such as, for example, a product seller, a tour agency, an insurance company, and a content providing company.

This processing is data selling processing in step S12 illustrated in Fig. 1.

The data acquired by the data collecting device 20 is provided to the data utilizing device 30 on the data user side such as various kinds of service providing companies via a network such as, for example, the Internet. The data user performs various kinds of processing by utilizing this acquired data.

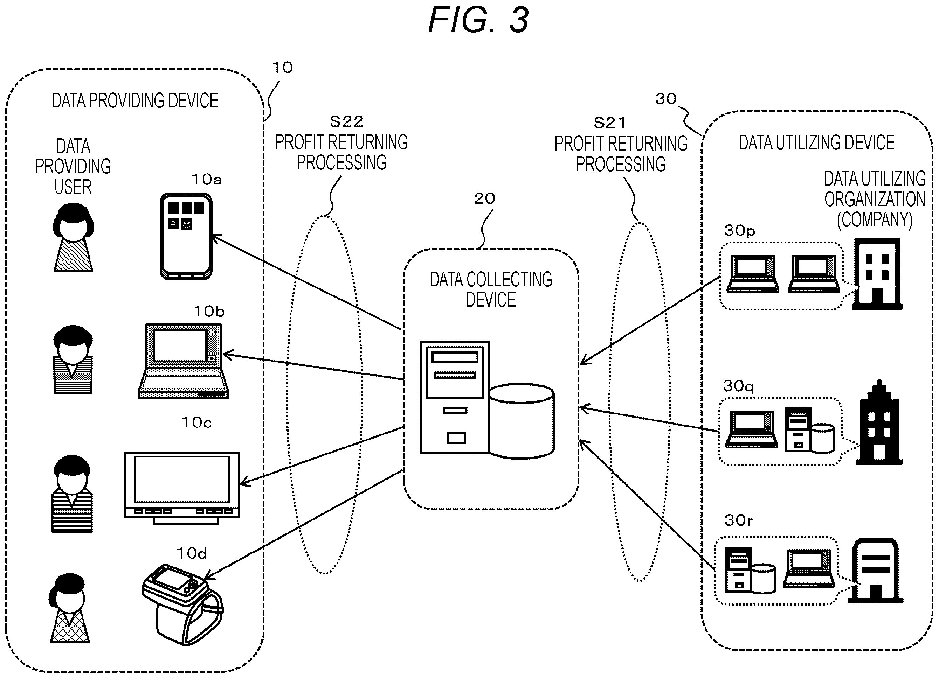

An example of data usage in the data trading market will be described with reference to Fig. 3.

The data user on the data utilizing device 30 side analyzes data by utilizing data purchased from the data collecting device 20 to utilize the analyzed data in, for example, development and improvement of a product and service, a targeted advertisement targeted at, for example, an individual who has a specific hobby, provision of product information, or the like.

The data user on the data utilizing device 30 side, for example, can perform allocation of profits to data providers on the basis of the profits obtained as a result of these kinds of processing, specifically, special offer of service, issuance of a coupon or a point, or the like, on the data providing device 10 via the data collecting device 20, for example.

This processing is profit returning processing in steps S21 to S22 illustrated in Fig. 3.

As described with reference to Fig. 1 to Fig. 3, in the data trading market,
first, data providing processing from the data providing device 10 to the data collecting device 20 is executed. (processing in step S11 in Fig. 1)

Thereafter, the data utilizing device 30 acquires data collected by the data collecting device 20 (processing in step S12 in Fig. 1), and performs processing utilizing the acquired data, for example, delivery of a targeted advertisement and the like at the data utilizing device 30.

Finally, the data utilizing device 30 provides a coupon, a point, or the like, to the data providing device 10 via the data collecting device 20 as processing of returning profits obtained through data utilization processing. (processing from steps S21 to S22 in Fig. 3)

In processing utilizing the above-described data trading market, the data provider desires to provide data after confirming that profits are allocated for the data provided by the data provider himself/herself.

That is, a user who is a data provider desires to confirm that data to be provided is data which is valuable for the data collector or the data user in advance, and considers to provide data after confirming that profits are highly likely to be allocated.

Most users do not desire to provide data for which profits are less likely to be allocated if possible because such provision only increases a possibility of leakage of personal information.

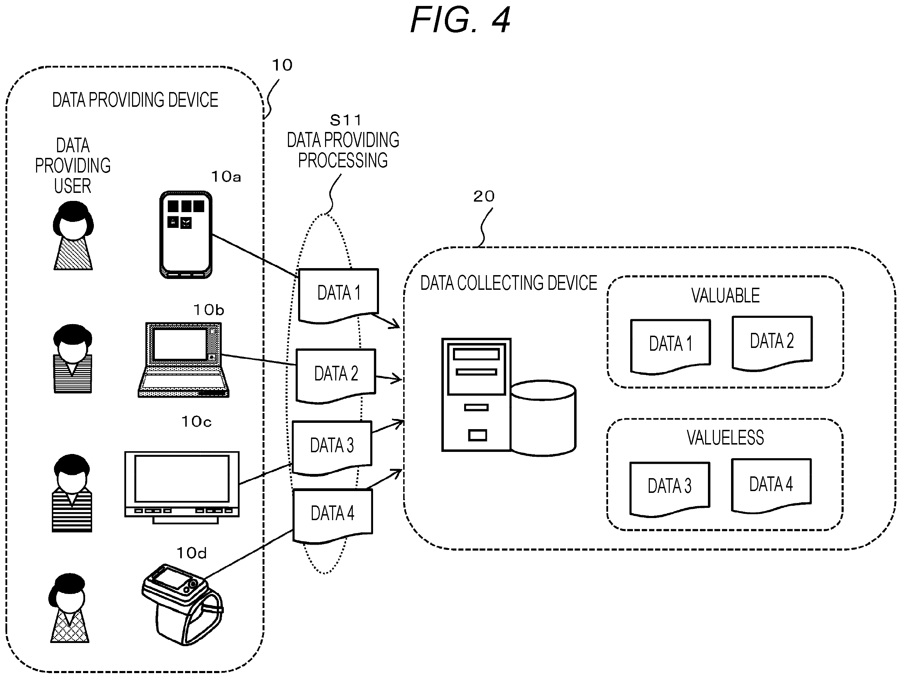

As illustrated in Fig. 4, various kinds of data are provided from the data providing user on the data providing device 10 side to the data collecting device 20.

However, in these kinds of data, valuable data and valueless data are mixed.

The data utilizing device 30 then acquires the valuable data from the data collecting device 20 and performs processing utilizing the acquired data, for example, delivery of a targeted advertisement and the like, and part of profits obtained as a result of the processing is returned to the data providing user on the data providing device 10 side.

However, the valueless data is not utilized by the data utilizing device 30 thereafter, and profits are not generated as a result, so that profits are not returned to the data providing user on the data providing device 10 side.

In this manner, if the provided data is not utilized, the user who is the data provider does not have any benefit.

Therefore, most users who are data providers desire to confirm that data to be provided is data which is valuable for the data collector and the data user in advance and provide only data for which profits are highly likely to be allocated.

As described above with reference to Fig. 2, data to be input to the data providing device 10 by the data providing user includes various kinds of personal information.

In this manner, the data to be provided from the data providing device 10 includes personal data of the provider and information regarding privacy of an individual, and in a case where the data is of low value for the data collector, or in a case where conditions on the collector side are not satisfied, it is common for the user (data provider) to consider that he/she does not desire to unnecessarily provide data to the data collecting device 20.

Meanwhile, the data collector who is an administrator of the data collecting device 20 also desires to reduce management cost of data by excluding data which is less valuable and data which does not satisfy conditions in advance.

As one effective method for satisfying this request, there is a possible method in which the data collecting device 20 examines whether or not data to be provided is valuable when data is provided or before data is provided from the data providing device 10, and stores only data which is determined as valuable in a database.

Specifically, for example, a method is effective in which examination for determining whether or not conditions presented by the data collector side are satisfied is performed on the basis of attribute values indicating attributes (such as age, sex, residence, body height, body weight and a blood-pressure value) of each piece of data input to the data providing device 10. However, if this method is tried to be simply performed, there exists a problem.

In order for the data collector to perform this examination, it is necessary to provide data of the data provider to the data collector once. However, there is a risk that the acquired data may leak out on the data collector side due to vulnerability of security of the data collector, or a risk that data may be diverted by an internal crime. Further, the data provider side also does not desire to unnecessarily disclose personal information, or the like.

As a method for preventing such a problem, it is also possible to make setting so that examination is performed on the data provider side. However, in this case, it is necessary to disclose an examination criterion for determining what kind of data the data collector is interested in and what kind of data the data collector considers valuable, that is, information regarding a "data value examination criterion" to the data provider.

However, the information regarding the "data value examination criterion" is information relating to knowledge and know-how of the data collector, and is information that the data collector does not desire to disclose.

Processing of the present disclosure solves these problems, and enables examination and confirmation as to, for example, whether data of the data provider satisfies conditions requested by the data collector or how valuable the data of the data provider is in advance without the data of the data provider and examination information (data value examination criterion) of the data collector being disclosed to each other.

[2. Secure calculation to be executed in information processing system of the present disclosure]

Secure calculation to be executed in the information processing system of the present disclosure will be described next.

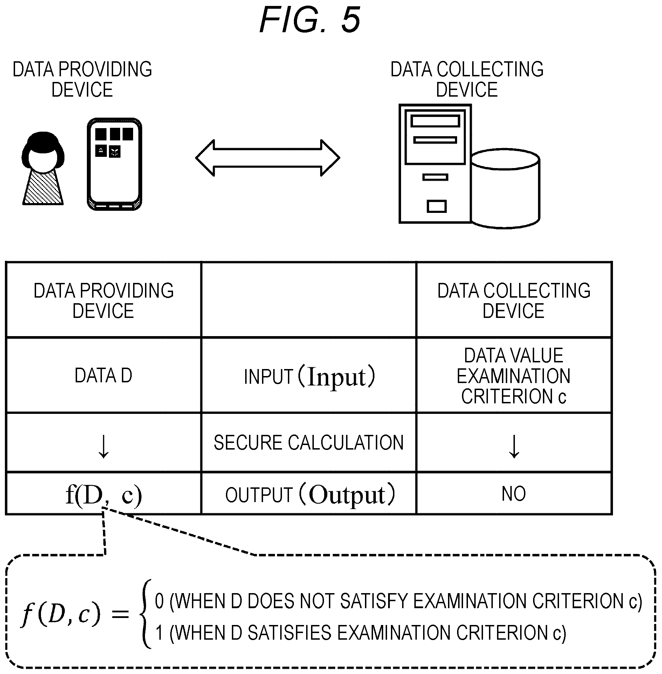

First, outline of the processing to be executed in the information processing system of the present disclosure will be described with reference to Fig. 5 and the subsequent drawings.

Fig. 5 is a view illustrating an example of the processing to be executed in the information processing system of the present disclosure.

In the information processing system of the present disclosure, for example, the following processing is performed between the data providing device 10 illustrated in Fig. 1 and the data collecting device 20.

The data providing device 10 determines value of "data D" to be provided to the data collecting device 20 on the basis of a "data value examination criterion C" specified by the data collecting device 20 and presents a determination result (examination result) to the data providing device 10.

Note that this examination processing of data value is executed under the following conditions.

(Condition 1) The data D is not provided from the data providing device 10 to the data collecting device 20.
(Condition 2) The data value examination criterion C is not provided from the data collecting device 20 to the data providing device 10.

The information processing system of the present disclosure realizes the above-described processing.

To realize the above-described processing, secure calculation is utilized.

The secure calculation is calculation processing which enables acquisition of an operation result of secure data, for example, various kinds of operation results of secure data such as an addition result and a multiplication result of the secure data by performing operation using converted data generated on the basis of the secure data without directly utilizing the secure data which is not allowed to be published.

In this manner, calculation processing using the converted data of the secure data will be referred to as secure calculation.

Details of the secure calculation will be described later.

An example illustrated in Fig. 5 indicates input/output data of the data providing device 10 and the data collecting device 20 in a case where the data providing device 10 executes processing of determining value of the "data D" to be provided to the data collecting device 20 on the basis of the "data value examination criterion C" specified on the data collecting device 20 side, using secure calculation.

That is, Fig. 5 illustrates an example of an input value (input) to be applied to the secure calculation, and an output value (output) obtained as a result of the secure calculation using the input value.

The data providing device 10 inputs the "data D" for which value is to be determined as the input value (input). This is, for example, personal information of the user, specifically, one piece of data such as "age" and "body weight". For example, data input by the user on the data providing device 10 side is utilized.

Meanwhile, the data collecting device 20 inputs the "data value examination criterion C" as the input value (input).

The secure calculation is executed using these input values, that is, the "data D" for which value is to be determined and the "data value examination criterion C".

Note that the secure calculation is executed by, for example, the data providing device 10 and the data collecting device 20 providing converted data of the "data D" and the "data value examination criterion C" to each other.

As illustrated in Fig. 5, the data providing device 10 obtains

the output value (output) = f(D, C)

as the output value (output) of a result of this secure calculation.

The output: f(D, C) is, for example, a value of 0 or 1, and

0 indicates that the "data D" does not satisfy the "data value examination criterion C", that is, the "data D" is valueless.
1 indicates that the "data D" satisfies the "data value examination criterion C", that is, the "data D" is valuable.

Note that a function: f(D, C) is a function for calculating value of the data D.

The user on the data providing device 10 side can confirm whether or not the "data D" to be provided satisfies the "data value examination criterion C" specified on the data collecting device 20 side, that is, whether or not the "data D" is recognized as valuable, on the basis of the output value (output) obtained as a result of this secure calculation.

Note that, as illustrated in Fig. 5, in the present example, there is no output value (output) of the data collecting device 20.

Through these kinds of processing, the user on the data providing device 10 side can determine value of the "data D" after the above-described conditions, that is,

(Condition 1) The data D is not provided from the data providing device 10 to the data collecting device 20.
(Condition 2) The data value examination criterion C is not provided from the data collecting device 20 to the data providing device 10.

are satisfied.

Note that, in the example illustrated in Fig. 5, the output value (output) = f(D, C) acquired by the data providing device 10 as a result of the secure calculation is set as a binary of 0 indicating valueless or 1 indicating valuable.

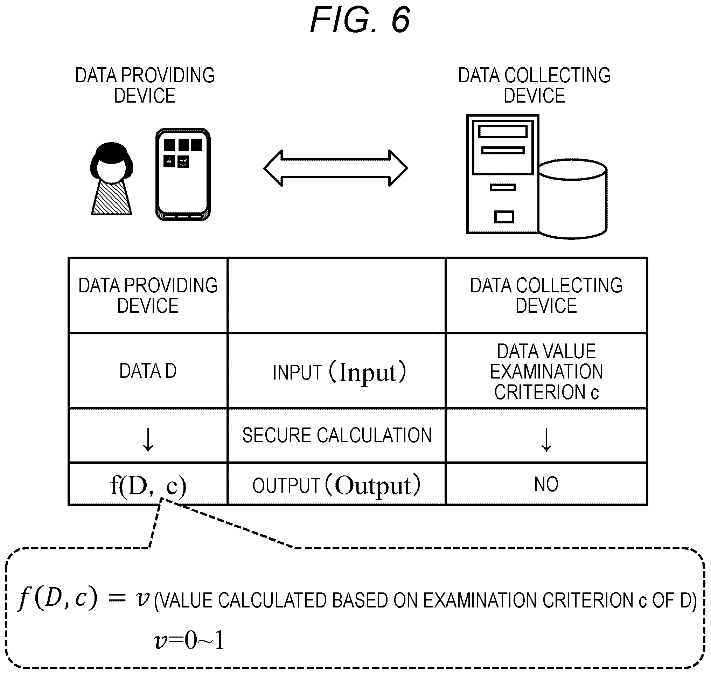

This is one example, and, for example, as illustrated in Fig. 6, secure calculation may be executed so that the output value (output) = f(D, C) acquired by the data providing device 10 as a result of the secure calculation is output as a value v indicating value of the data.

For example, it is also possible to employ a configuration where secure calculation is performed so that a value in a range where v = 0 to 1 is output, and various values between 0 indicating valueless and 1 indicating valuable are output.

Further, the output value (output) = f(D, C) may be set as a function of outputting a value indicating a sales price itself of the data such as a value v = 0 yen to 1000 yen, or 0 dollar to 100 dollars.

[3. Outline of secure calculation]

Next, an outline of the secure calculation will be described.

As described above, the secure calculation is calculation processing which enables acquisition of an operation result of secure data, for example, various kinds of operation results of secure data such as an addition result and a multiplication result of the secure data by performing operation using converted data generated on the basis of the secure data without directly utilizing the secure data which is not allowed to be published.

In this manner, calculation processing using the converted data of the secure data will be referred to as secure calculation.

In calculation processing of the secure calculation, the secure data itself is not utilized, but converted data of the secure data is utilized. The converted data is various types of data different from a type of original secure data, such as, for example, encrypted data and divided data (distributed information) of the secure data.

While there is a plurality of different schemes as a scheme of the secure calculation, as an example, there is, for example, a GMW scheme disclosed in Non-Patent Document 1 (O. Goldreich, S. Micali and A. Wigderson. How to play any mental game. STOC'87, pp. 218 to 229, 1987).

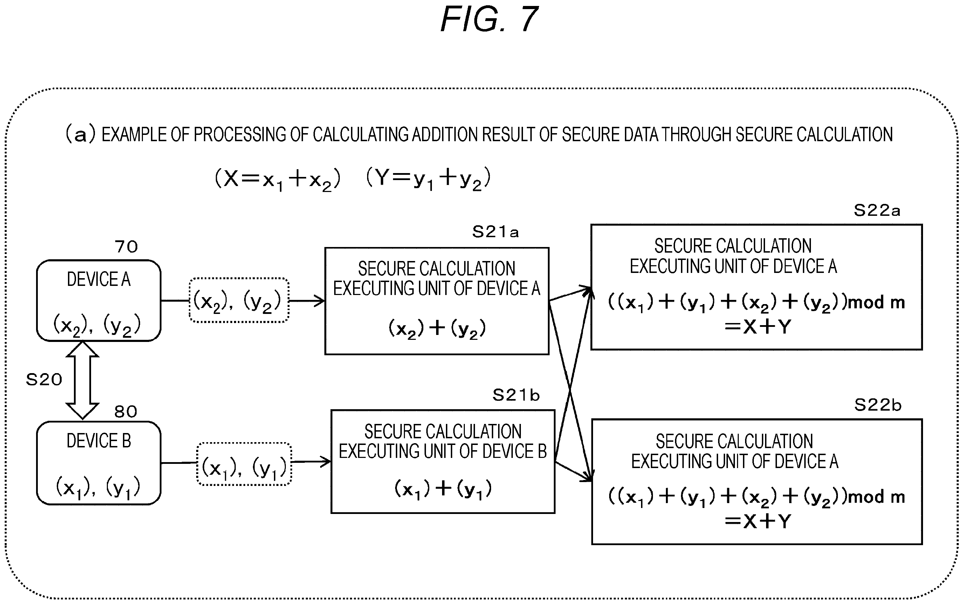

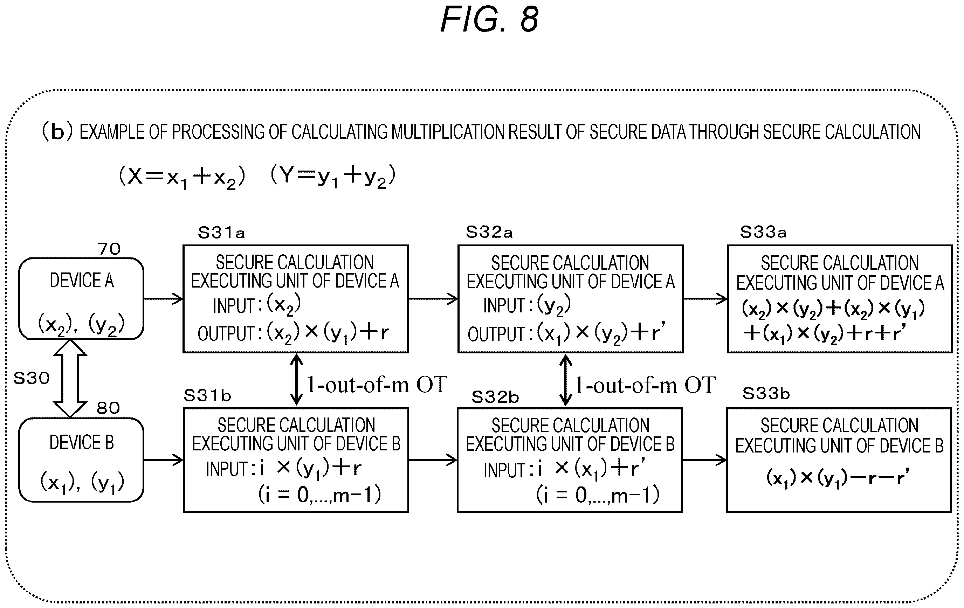

Outline of secure calculation processing in accordance with the GMW scheme will be described with reference to Fig. 7 and Fig. 8.

Fig. 7 is a view illustrating a processing example of calculating an addition value of secure data through the secure calculation in accordance with the GMW scheme.

A device A, 70 holds secure data X (for example, an explanatory variable (x)).

Further, a device B, 80 holds secure data Y (for example, an outcome variable (y)).

These types of secure data X and Y are secure data such as personal data which is not preferable to be published.

The device A, 70 divides the secure data X into two pieces of data as follows. Note that X is set as residual data: mod m of a value m specified in advance.

$$X = ((x\_1) + (x\_2))\bmod\_m$$

In the above-described equation, (x_1) is uniformly and randomly selected from 0 to (m-1), and (x_2) is defined so that

$$(x\_2) = (X - (x\_1))\bmod m$$

is satisfied.

In this manner, two pieces of divided data of (x_1) and (x_2) are generated.

Note that data to be divided here is, for example, a value (1) of sex of a certain sample (user), which is the secure data illustrated in Fig. 1, and, when m = 100, it is possible to set divided data in various different aspects such as an aspect where the value (1) is divided into (30) and (71) or an aspect where the value (1) is divided into (45) and (56).

In a case of a value (0) of sex, it is possible to perform processing of setting divided values as (40) and (60), for example.

It is possible to perform processing of dividing age (54) into (10) and (44) or perform other various kinds of dividing processing, for example.

It is important that original secure data (explanatory variable) cannot be specified from a single piece of converted data (here, one piece of divided data).

For example, a set of divided data is not published, and, for example, only one piece of divided data is published, that is, provided to other devices.

Meanwhile, the device B, 80 also divides the secure data Y into two pieces of data as follows.

$$Y = ((y\_1) + (y\_2))\bmod\_m$$

In the above-described equation, (y_1) is uniformly and randomly selected from 0 to (m-1), and (y_2) is determined so that

$$(y\_2) = (Y - (y\_1))\bmod m$$

is satisfied.

In this manner, two pieces of divided data of (y_1) and (y_2) are generated.

As illustrated in Fig. 7, the device A, 70 and the device B, 80 provide part of the above-described divided data to each other in step S20.

The device A, 70 provides the divided data (x_1) to the device B, 80.

Meanwhile, the device B, 80 provides the divided data (y_2) to the device A, 70.

X and Y are respectively secure data, and are not allowed to flow out.

However, even if only one of (x_1) or (x_2)which is divided data of X is acquired, the secure data X cannot be specified.

In a similar manner, even if only one of (y_1) or (y_2) which is divided data of Y is acquired, the secure data Y cannot be specified.

Therefore, data of only part of the divided data of the secure data is data from which the secure data cannot be specified, and, therefore, is allowed to be output to outside.

In this manner, the device A, 70 outputs the divided data (x_1) to a calculation processing executing unit of the device B, 80.

Meanwhile, the device B, 80 outputs the divided data (y_2) to a calculation processing executing unit of the device A, 70.

(Step S21a)

The calculation processing executing unit of the device A, 70 executes the following processing of adding the respective pieces of divided data by utilizing the divided data in step S21a.

$$((x\_2) + (y\_2)) \bmod m$$

The device A, 70 outputs this addition result to the calculation processing executing unit of the device B, 80.

(Step S21b)

On the other hand, the calculation processing executing unit of the device B, 80 executes the following processing of adding the respective pieces of divided data by utilizing the divided data in step S21b.

$$((x\_1) + (y\_1)) \bmod m$$

The device B, 80 outputs this addition result to the calculation processing executing unit of the device A, 70.

(Step S22a)

The calculation processing executing unit of the device A, 70 then executes the following processing in step S22a.

Two addition results of the followings are further added:

(1) (x_2)+ (y_2) which is the addition result of the divided data calculated in step S21a; and
(2) (x_1) + (y_1) which is the addition result of the divided data input from the device B, 80. That is, the following calculation is executed.

$$((x\_1) + (y\_1) + (x\_2) + (y\_2)) \bmod m$$

A total addition value of this divided data is equal to an addition value of the original secure data X and Y.
That is,

$$((x\_1) + (y\_1) + (x\_2) + (y\_2)) \bmod m$$
$$= X + Y$$

(Step S22b)

On the other hand, the calculation processing executing unit of the device B, 80 executes the following processing in step S22b.
Two addition results of the followings are further added:

(1) (x_1) + (y_1) which is the addition result of the divided data calculated in step S21b; and
(2) (x_2) + (y_2) which is the addition result of the divided data input from the device A, 70. That is, the following calculation is executed.

$$((x\_1) + (y\_1) + (x\_2) + (y\_2)) \bmod m$$

A total addition value of this divided data is equal to an addition value of the original secure data X and Y.
That is,

$$((x\_1) + (y\_1) + (x\_2) + (y\_2)) \bmod m$$
$$= X + Y$$

In this manner, both the device A and the device B can calculate the addition value of the secure data X and Y, that is, X + Y without outputting respective pieces of secure data X and Y to outside.

The processing illustrated in Fig. 7 is an example of addition value calculation processing of the secure data to which the secure calculation in accordance with the GMW scheme is applied.

Note that the above-described processing described with reference to Fig. 7 has been described as simplified outline of the addition value calculation processing of the secure data X and Y, and, in a case where addition processing and multiplication processing of the secure data are actually performed, typically, it is necessary to repeatedly execute secure calculation by applying a calculation result obtained through single secure calculation as an input value of the next secure calculation, or the like.

Fig. 8 is a view illustrating a processing example of calculating a multiplication value of secure data through the secure calculation in accordance with the GMW scheme.

A device A, 70 holds secure data X.

Further, a device B, 80 holds secure data Y.

These types of secure data X and Y are secure data which is not preferable to be published.

The device A, 70 divides the secure data X into two pieces of data.

$$X = ((x\_1) + (x\_2)) \bmod m$$

In this manner, two pieces of divided data (x_1) and (x_2)are generated by randomly dividing the secure data X.

Meanwhile, the device B, 80 also divides the secure data Y into two pieces of data.

$$Y = ((y\_1) + (y\_2)) \bmod m$$

In this manner, two pieces of divided data (y_1) and (y_2) are generated by randomly dividing the secure data Y.

In step S30 illustrated in Fig. 8, the device A, 70 provides the divided data (x_1) to the calculation processing executing unit of the device B, 80.

Meanwhile, the device B, 80 provides the divided data (y_2) to the calculation processing executing unit of the device A, 70.

X and Y are secure data and are not allowed to flow out.

However, even if only one of (x_1) or (x_2)which is divided data of X is acquired, the secure data X cannot be specified.

In a similar manner, even if only one of (y_1) or (y_2) which is divided data of Y is acquired, the secure data Y cannot be specified.

Therefore, data of only part of the divided data of the secure data is data from which the secure data cannot be specified, and, therefore, is allowed to be output to outside.

In this manner, the device A, 70 outputs the divided data (x_1) to a calculation processing executing unit of the device B, 80.

Meanwhile, the device B, 80 outputs the divided data (y_2) to a calculation processing executing unit of the device A, 70.

Processing of the calculation processing executing unit of the device A, 70 will be described.

The device A, 70 holds (x_1) and (x_2)which are divided data of X, and (y_1) which is divided data of Y received from the device B, 80.

The processing is executed through the following procedure.

(step S31a)

The device A, 70 executes [1-out-of-m OT]
in which an input value is set as x_2, and
an output value M(x_2) is set as $M\_(x\_2) = (x\_2) \times (y\_1) + r$, with the device B, 80.

Note that [1-out-of-m OT (Oblivious Transfer)] is operation protocol for executing the following processing.

Two types of entity of a transmitter and a selector exist.

The transmitter has an input value $(M\_0, M\_1, ..., M\_{(m-1)})$ including m elements.

The selector has an input value of $\sigma \in \{0, 1, ..., m-1\}$.

The selector requests transmission of one element to the transmitter having m elements, and the selector can obtain only a value of one element $M\_\sigma$. The selector cannot obtain other (m-1) elements: $M\_i$ ($i \neq \sigma$).

Meanwhile, the transmitter cannot know the input value $\sigma$ of the selector.

In this manner, [1-out-of-m OT] protocol is protocol for transmitting, and receiving only one element from m elements to proceed with operation processing, and is protocol which is set so that which element out of m elements is transmitted and received cannot be specified on the element receiving side.

(Step S32a)

The device A, 70 executes [1-out-of-m OT]
in which the input value is set as y_2, and
the output value M_(y_2)' is set as M_(y_2)' = (x_1) × (y_2) + r', with the device B, 80.

(Step S33a)

As the output value of the device A, 70, the output value: M_(x_2) + M_(y_2) is calculated in accordance with the following equation.

```
M_(x_2) + M_(y_2)
= ((x_2) × (y_2) + (x_2) × (y_1) + r + (x_1) × (y_2) + r')mod m
```

Processing of the calculation processing executing unit of the device B, 80 which is on the other side will be described.
The device B, 80 holds (y_1) and (y_2) which are divided data of Y, and (x_1) which is divided data of X received from the device A, 70.
The processing is executed through the following procedure.

(Step S31b)

A random number $r \in \{0, ..., m-1\}$ is selected, and an input value sequence
i × (y_1) + r
where i = 0, 1, ..., (m-1),
which is to be used in [1-out-of-m OT], is generated on the basis of the divided value y_1 of the secure data Y.
Specifically, the following input value sequences: M_0 to M_(m-1) are generated.

```
M_0 = 0 × (y_1) + r,
M_1 = 1 × (y_1) + r,
...,
M_(m-1) = (m-1) × (y_1) + r.
```

These input value sequences are generated.
Further, the device B, 80 executes [1-out-of-m OT] in accordance with setting in step S31a described above, with the device A, 70.

(Step S32b)

A random number $r' \in \{0, ..., m-1\}$ is selected, and an input value sequence
i × (x_1) + r'
where i = 0, 1, ..., (m-1),
which is to be used in [1-out-of-m OT], is generated on the basis of the divided value y_1.
Specifically, the following input value sequences: M'_0 to M'_(m-1) are generated.

```
M'_0 = 0 × (x_1) + r',
M'_1 = 1 × (x_1) + r',
...,
M'_(m-1) = (m-1) × (x_1) + r'.
```

These input value sequences are generated.
Further, the device B, 80 executes [1-out-of-m OT] in accordance with setting in step S32a described above, with the device A, 70.

(Step S33b)

As the output value of the device B, 80, the following output value is calculated.

$$((x\_1) \times (y\_1) - r - r') \bmod m$$

The above-described value is calculated as the output value of the device B, 80.
A multiplication value $X \times Y$ of the secure data X and Y can be calculated through the following calculation processing using the output value calculated by the device A, 70 in step S33a and the output value calculated by the device B, 80 in step S33b.

$$(((x\_2) \times (y\_2) + (x\_2) \times (y\_1) + r + (x\_1) \times (y\_2) + r') + $$
$$((x\_1) \times (y\_1) - r - r')$$
$$= ((x\_1) + (x\_2)) \times ((y\_1) + (y\_2))$$
$$= X \times Y$$

The multiplication value $X \times Y$ of the above-described secure data X and Y can be calculated by the device A, 70 and the device B, 80 providing the calculation results in step S33a and step S33b to each other.
In this manner, both the device A and the device B can calculate the multiplication value of the secure data X and Y, that is, XY without outputting respective pieces of secure data X and Y to outside.
The processing illustrated in Fig. 8 is an example of multiplication value calculation processing of the secure data to which the secure calculation in accordance with the GMW scheme is applied.
Note that the above-described processing described with reference to Fig. 8 has been described as simplified outline of the multiplication value calculation processing of the secure data X and Y, and, in a case where addition processing and multiplication processing of the secure data are actually performed, typically, it is necessary to repeatedly execute secure calculation by applying a calculation result obtained through single secure calculation as an input value of the next secure calculation, or the like.
In addition, examples of secure calculation processing illustrated in Figs. 7 and 8 are one example of the secure calculation processing and an aspect of the secure calculation includes other various different calculation processing.

[4. Configuration and processing of information processing device]

A configuration and processing of an information processing device constituting the information processing system of the present disclosure will be described next.
As described above with reference to Figs. 5 and 6, in the information processing system of the present disclosure, for example, the following processing is performed between the data providing device 10 illustrated in Fig. 1 and the data collecting device 20.
The data providing device 10 determines value of "data D" to be provided to the data collecting device 20 on the basis of a "data value examination criterion C" specified by the data collecting device 20 and presents a determination result (examination result) to the data providing device 10.
Note that this examination processing of data value is executed under the following conditions.

(Condition 1) The data D is not provided from the data providing device 10 to the data collecting device 20.
(Condition 2) The data value examination criterion C is not provided from the data collecting device 20 to the data providing device 10.

The information processing system of the present disclosure realizes the above-described processing.
To realize the above-described processing, secure calculation is utilized.
By utilizing the secure calculation, the data providing device 10 can determine whether or not the "data D" to be provided to the data collecting device 20 is data which is acknowledged as valuable on the basis of the "data value examination criterion C" specified on the data collecting device 20 side after the above-described (condition 1) and (condition 2) are satisfied.

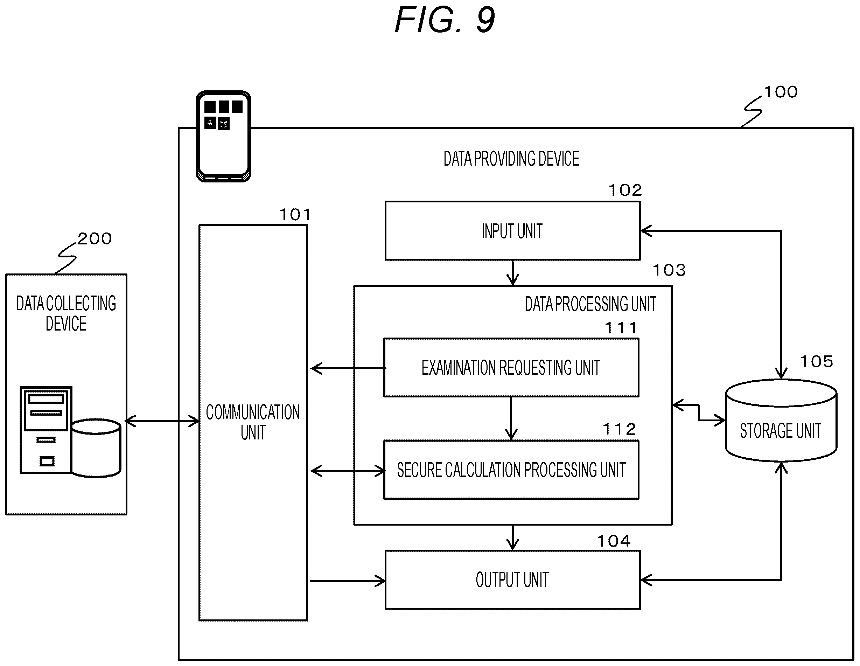

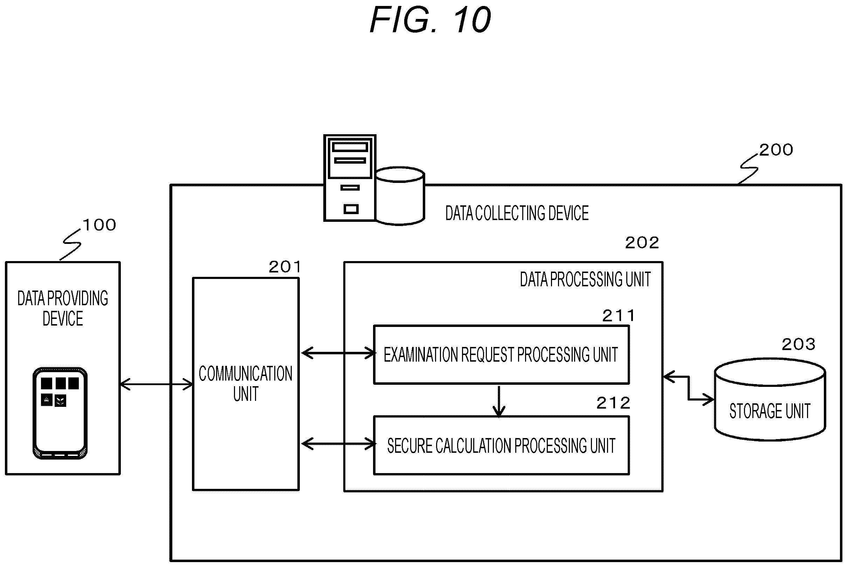

Configuration examples of the data providing device and the data collecting device will be described with reference to Fig. 9 and Fig. 10.

The configuration example of the data providing device 100 will be described first with reference to Fig. 9.

The data providing device 100 illustrated in Fig. 9 corresponds to the data providing device 10 illustrated in Fig. 1 and other drawings. That is, the data providing device 100 is an information processing device such as, for example, a PC, a smartphone, and a mobile terminal to which the data providing user inputs data.

As illustrated in Fig. 9, the data providing device 100 includes a communication unit 101, an input unit 102, a data processing unit 103, an output unit 104, and a storage unit 105.

Further, the data processing unit 103 includes an examination requesting unit 111 and a secure calculation processing unit 112.

The communication unit 101 executes data communication with a data collecting device 200. For example, the communication unit 101 executes communication processing via a communication network such as the Internet.

The data collecting device 200 corresponds to the data collecting device 20 described with reference to Fig. 1 and other drawings.

The communication unit 101, for example, executes data communication with the data collecting device 200 upon execution of the above-described secure calculation processing, or the like.

Note that a specific communication sequence will be described later.

The input unit 101 inputs, for example, an input value upon execution of the secure calculation to the data processing unit 103. The input value is directly input by the user. Alternatively, data stored in the storage unit 105 may be input to the data processing unit 103 as the input value.

The data processing unit 103 includes the examination requesting unit 111 and the secure calculation processing unit 112.

The examination requesting unit 111 outputs an examination request of value of the input value input at the input unit 101, that is, value acknowledged on the basis of the "data value examination criterion" of the data collecting device 200 to the data collecting device 200 via the communication unit 101.

In response to output of the examination request to the data collecting device 200 by the examination requesting unit 111, the secure calculation processing unit 112 executes secure calculation with the data collecting device 200 in a case where the examination request is accepted from the data collecting device 200.

In the secure calculation, as described above with reference to Fig. 5 and Fig. 6, the following data is input as input data at the respective two devices:

the "data D" for which value is to be determined as the input value (input) of the data providing device 100, and
the "data value examination criterion C" as the input value (input) of the data collecting device 200.

The respective devices individually input these kinds of data, and transmit and receive converted data (for example, distributed information) of these kinds of data to execute secure calculation.

The data providing device 100 obtains

the output value (output) = f(D, C)

as a result of the secure calculation.

Note that the output value (output) = f(D, C) is a calculation result value calculated by applying the "data D" which is the input value (input) of the data providing device 100 to the function f(D, C), that is, a data value index value.

For example, the output value is a binary of 0 indicating valueless or 1 indicating valuable, or an index value for data value examination, such as value: v = 0 to 1, v = 0 yen to 1000 yen, and v = \$0 to \$100.

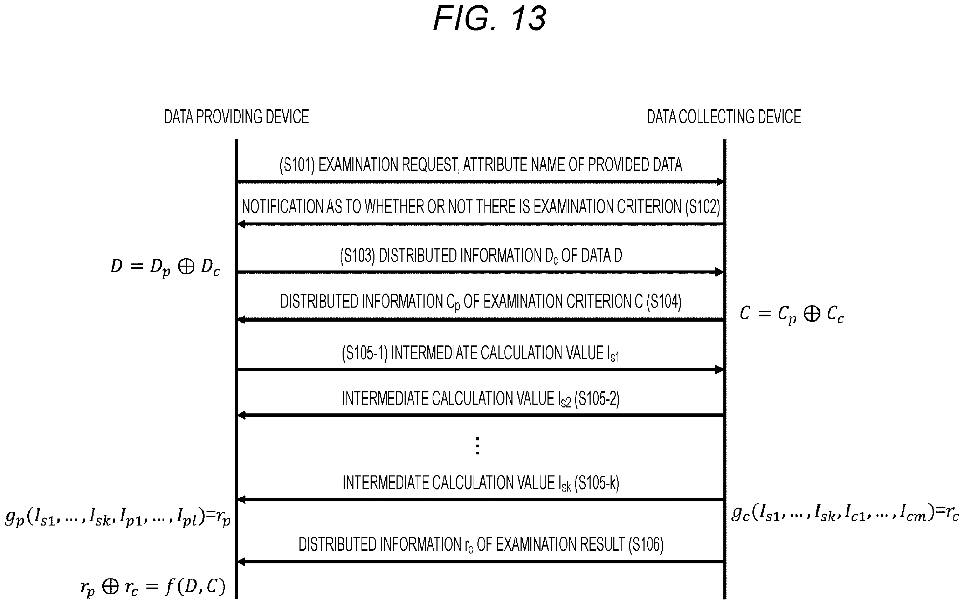

Note that a specific example of the secure calculation for acquiring this data value determination result will be described later with reference to a communication sequence diagram illustrated in Fig. 13.

The output unit 104 outputs the output value (output) = f(D, C) or the like, which is a result of the above-described secure calculation. The output unit 104 is specifically configured with a display unit and a speech output unit.

The storage unit 105 stores a program, a parameter, or the like, to be applied to secure calculation processing and other data processing to be executed at the data processing unit 103, and is utilized as a work area for data processing to be executed at the data processing unit 103.

The configuration example of the data collecting device 200 will be described next with reference to Fig. 10.

The data collecting device 200 illustrated in Fig. 10 corresponds to the data collecting device 20 illustrated in Fig. 1 and other drawings. That is, the data collecting device 200 is, for example, an information processing device such as a data collecting server.

As illustrated in Fig. 10, the data collecting device 200 includes a communication unit 201, a data processing unit 202, and a storage unit 203.

Further, the data processing unit 202 includes an examination request processing unit 211 and a secure calculation processing unit 212.

The communication unit 201 executes data communication with the data providing device 100 and devices at the ground, for example, the data utilizing device. For example, the communication unit 101 executes communication processing via a communication network such as the Internet.

The communication unit 201, for example, executes data communication with the data providing device 100 upon execution of the above-described secure calculation processing or the like.

Note that a specific communication sequence will be described later.

The data processing unit 202 includes the examination request processing unit 211 and the secure calculation processing unit 212.

The examination request processing unit 211 receives input of an examination request which is input from the data providing device 100, that is, an examination request as to whether or not the input data at the data providing device 100 is acknowledged as valuable on the basis of the "data value examination criterion" of the data collecting device 200, and performs processing on this examination request. For example, the examination request processing unit 211 accepts the examination request and determines whether or not to perform secure calculation of calculating a data value index value of the input data.

The secure calculation processing unit 212 executes secure calculation of calculating a data value index value for the input data of the data providing device 100 in a case where the examination request is accepted at the examination request processing unit 211.

In the secure calculation, as described above with reference to Fig. 5 and Fig. 6, the following data is input:

the "data D" for which value is to be determined as the input value (input) of the data providing device 100, and the "data value examination criterion C" as the input value (input) of the data collecting device 200, and converted data (for example, distributed information) of these kinds of data are transmitted and received to execute secure calculation.

The data providing device 100 obtains
the output value (output) = f(D, C)
as a result of the secure calculation.

The output value (output) = f(D, C) is, for example, a binary of 0 indicating valueless or 1 indicating valuable, or an index value (data value index value) of data value determination, such as value: v = 0 to 1, v = 0 yen to 1000 yen, and v = \$0 to \$100.

However, the data collecting device does not acquire the output value (output) which is a result of this secure calculation.

Note that a specific example of the secure calculation for acquiring this data value determination result will be described later with reference to a communication sequence diagram illustrated in Fig. 13.

The storage unit 203 stores a program, a parameter, or the like, to be applied to secure calculation processing and other data processing to be executed at the data processing unit 202, and is utilized as a work area for data processing to be executed at the data processing unit 103.

Further, data value examination criteria corresponding to various kinds of attribute name are stored in the storage unit 203.

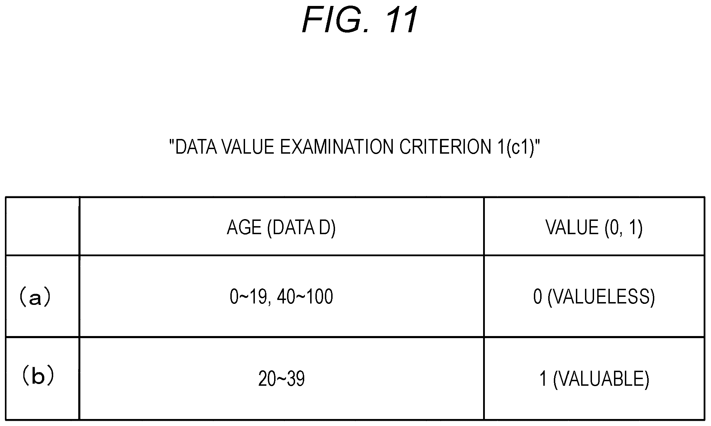

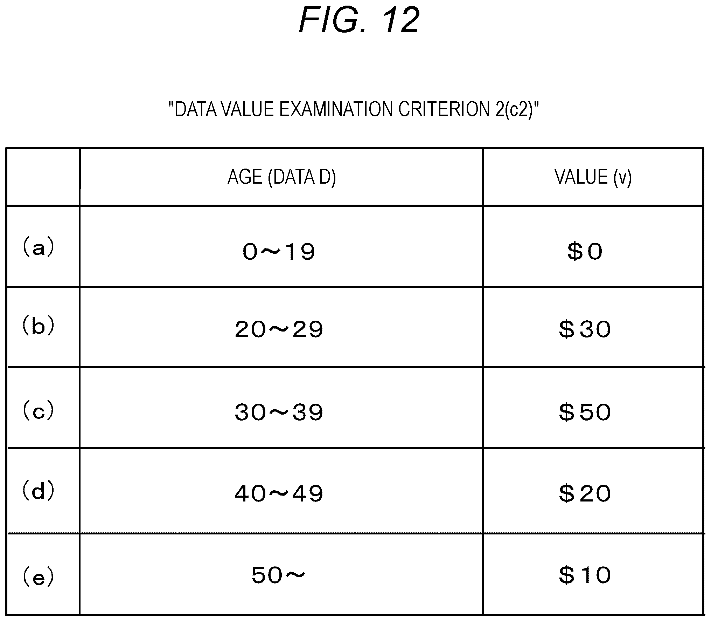

Examples of the data value examination criteria stored in the storage unit 203 will be described with reference to Fig. 11 and Fig. 12.

Fig. 11 and Fig. 12 both illustrate examples of the data value examination criteria corresponding to attribute name = age.

A data value examination criterion C1 illustrated in Fig. 11 is an example of the data value examination criterion in which a binary of 0 indicating that data is valueless or
1 indicating that data is valuable is set
as an output (output) = f(D, C) in accordance with age.

A data value examination criterion C2 illustrated in Fig. 12 is an example of the data value examination criterion in which a value indicating a data price (a sales price or an amount to be returned) between \$0 and \$50 as data value is set as an output (output) = f(D, C) in accordance with age.

In this manner, various data value examination criteria are stored in the storage unit 203.

[5. Sequence of data processing to be executed between data providing device and data collecting device]

An example of a sequence of data processing to be executed between the data providing device 100 and the data collecting device 200 will be described next with reference to a sequence diagram illustrated in Fig. 13.

Fig. 13 is a sequence diagram explaining a sequence of processing to be executed between the data providing device 100 illustrated on a left side and the data collecting device 200 illustrated on a right side.

Processing is sequentially performed from steps S101 to S106 between the devices.

Details of the processing of the respective steps illustrated in this sequence diagram will be sequentially described.

(Step S101)

Step S101 is processing of transmitting an examination request from the data providing device 100 to the data collecting device 200.

The examination requesting unit 111 of the data providing device 100 outputs an examination request as to whether or not the input value (data D) input at the input unit 101 satisfies the "data value examination criterion" of the data collecting device 200, to the data collecting device 200 via the communication unit 101.

Note that, upon this examination request, in place of the input data (data D) itself input at the input unit 101 of the data providing device 100, attribute name of the input data is transmitted from the data providing device 100 to the data collecting device 200.

Data input at the data providing device 100 is executed by utilizing, for example, a UI described above with reference to Fig. 2.

The UI described with reference to Fig. 2 is set so that data is input to each item of (1) sex, (2) age, (3) address, (4) place of employment, (5) annual income, (6) educational background, (7) hobby, (8) body height, (9) body weight, (10) previous disease, and (11) blood pressure.

This item name corresponds to the "attribute name". Data input by the user to the item (attribute name) corresponds to an "attribute value".

The attribute name is name of certain property and characteristics, and, for example, indicates age, sex, residence, body height, body weight, a blood-pressure value, or the like.

The attribute value indicates these property and characteristics, and, for example, attribute values corresponding to the attribute name described above are 40 (years old), male, Shinagawa-ku Tokyo, 170 cm, 60 kg, 80 to 120 mmHg, or the like.

In the examination request in step S101, the attribute name is transmitted from the data providing device 100 to the data collecting device 200.

That is, the input data D (attribute value) input at the data providing device 100 is not presented or published to a third party including the data collecting device 200.

When the data providing device 100 performs examination request transmission processing in step S101, the examination requesting unit 111 executes examination request after confirming that the input data (attribute value) input by the user is stored (registered) in the storage unit 105 in association with the attribute name.

This examination request is transmitted to a data collector device 200 via the communication unit 101.

The data collector device 200 receives the examination request accompanied by the attribute name received from the data providing device 100 at the communication unit 201, and inputs the examination request to an examination request processing unit 111.

(Step S102)

Step S102 is processing in which the data collecting device 200 makes a notification as to whether or not there is an examination criterion for the data providing device 100.

The examination criterion is, for example, the "data value examination criterion C" described above with reference to Figs. 5, 6, 11 and 12, and an examination criterion for determining whether or not data input at the data providing device 100 is valuable.

In the examination, it is determined whether or not the attribute value for the transmitted attribute name satisfies conditions requested by the data collector, that is, the "data value examination criterion C".

Note that, the "data value examination criterion C" is sequentially changed. That is, the "data value examination criterion C" is sequentially changed in accordance with data to be collected by the data collecting device 200.

As a specific example, it is assumed that the data that the data collecting device 200 desires to collect is, for example, the following data:

(a) life log data of a provider having a specific disease;
(b) clinical history data of a provider having a specific genome pattern; and
(c) purchase history of a provider who lives in a specific region and who is in a specific age group.

In a case where the data collecting device 200 desires to collect these kinds of specific data of (a) to (c), the "data value examination criterion C" becomes an examination criterion which sets high values for the above-described specific data (a) to (c).

Further, as another examination criterion, for example, it is possible to utilize an examination criterion which is set so that data is acknowledged as valuable if the data is rare instead of being set so that the specific data as described above is acknowledged as valuable.

It is also possible to utilize an examination criterion which determines that data is highly valuable in a case where the data has rare characteristic or user needs of the data has highly characteristic properties.

In this manner, the examination criterion is different in accordance with purpose of collection of the data collecting device 200.

Note that these examination criteria are stored in the storage unit 203 of the data collecting device 200 in association with the attribute name.

That is, it is possible to determine one examination criterion to be utilized on the basis of the attribute name.

When receiving the examination request from the data providing device 100 in step S101, the data collecting device 200 confirms whether or not the examination criterion corresponding to the attribute name received upon the examination request is stored in the storage unit 203, at the examination request processing unit 211.

If the examination criterion is not stored, because it is impossible to perform data value determination, the data collecting device 200 notifies the data providing device 100 that value determination cannot be performed because the examination criterion does not exist, via the communication unit 201 in step S102, and finishes the processing.

Meanwhile, in a case where it is confirmed that the examination criterion corresponding to the attribute name received upon the examination request is stored in the storage unit 203, the data collecting device 200 notifies the data providing device 100 that the examination criterion exists, and value determination is started, via the communication unit 201 in step S102, and executes processing of the next step S103 and subsequent steps.

(Step S103)

When receiving a notification that the examination criterion exists and value determination is started, from the data collecting device 200 in step S102, the data providing device 100 starts secure calculation processing for determining value of the input data.

Processing from steps S103 to S106 is a step of executing secure calculation processing for determining value of the input data.

Note that the secure calculation to be executed here is the secure calculation described above with reference to Fig. 5 and Fig. 6.

Specifically, the secure calculation is calculation of obtaining an output (output) to be used by the data providing device 100 to confirm value of the "data D" to be provided to the data collecting device 200 from the data providing device 100, that is, value of the "data D" determined in accordance with the "data value examination criterion C" specified on the data collecting device 200 side, under the following conditions.

(Condition 1) The data D is not provided from the data providing device 100 to the data collecting device 200.

(Condition 2) The data value examination criterion C is not provided from the data collecting device 200 to the data providing device 100.

Note that the "data D" to be provided to the data collecting device 200 is input data (attribute value) corresponding to the "attribute name" transmitted when the data providing device 100 performs processing of transmitting the examination request to the data collecting device in step S101.

Further, the "data value examination criterion C" is the "data value examination criterion C" corresponding to the above-described "attribute name" acquired by the data collecting device 200 from the storage unit 203 at the time when a notification that there is an examination criterion or there is no examination criterion is made in step S102.

From steps S103 to S106, as described above with reference to Fig. 5 and Fig. 6, secure calculation in which the "data D" and the "data value examination criterion C" are set as input values (input) is executed.

That is, the data providing device 100 can acquire a value index value ($f(D, C)$) indicating value of the "data D" as the output value (output) without the "data D" and the "data value examination criterion C" being disclosed to each other.

As described above with reference to Fig. 5 and Fig. 6, the output value (output) = $f(D, C)$ is, for example, a binary of 0 indicating valueless or 1 indicating valuable, or an index value for data value determination, such as value: $v = 0$ to $1$, $v = 0$ yen to $1000$ yen, and $v = \$0$ to $\$100$.

Note that there is a plurality of different schemes as a scheme of the secure calculation, including an example of the GMW scheme described above with reference to Fig. 7 and Fig. 8.

Processing from steps S103 to S106 illustrated in the sequence diagram in Fig. 13 is a step of executing secure calculation in accordance with this GMW scheme.

The processing in step S103 is processing in which the data providing device 100 transmits distributed information Dc which is converted data of the data D to the data collecting device 200.

Note that the data D is input data (attribute value) corresponding to the "attribute name" transmitted when the data providing device 100 performs processing of transmitting the examination request to the data collecting device in step S101.

The secure calculation processing unit 112 within the data providing device 100 performs the following processing

to generate the distributed information Dc of the data D.

First, the data D is divided into two pieces of information Dp and Dc.

Note that the data D cannot be estimated from either one of the two pieces of information Dp and Dc.

In a simple example, as will be described below, Dc is selected so that data D is calculated from exclusive-or operation (XOR) of Dp and Dc.

$$D = Dp(XOR)Dc$$

In the above-described equation, (XOR) means exclusive-or operation of Dp and Dc.

Further, D, Dp, and Dc are all data expressed as a binary number having a predetermined bit depth, for example, eight bits, and the exclusive-or operation is performed using data at corresponding bit positions of each data.

Note that a method for generating the distributed information Dc of the data D is not limited to the above-described exclusive-or operation (XOR), and various methods can be used.

For example, the distributed information Dc of the data D may be generated in accordance with the processing described above with reference to Fig. 7.

That is, the data D is set as residual data: mod m of a value m specified in advance.

$$D = (Dp + Dc)mod\_m$$

In the above-described equation, Dp is uniformly and randomly selected from 0 to (m-1), and Dc is determined so that

$$Dc = (D - (Dp))mod\ m$$

is satisfied.

In this manner, two pieces of distributed information (Dp) and (Dc) are generated.

Note that data for which distributed information is to be generated here is input data (attribute value) corresponding to the attribute name transmitted in step S101.

For example, in a case where the attribute name = age, and the input data (attribute value): D = 28,

$$D = (Dp + Dc)mod\_m$$

In a case where m = 50 and Dp = 12 in the above-described equation,

$$Dc = (D - (Dp))mod\ m$$
$$= (28 - 12)mod50$$
$$= 16$$

In this manner, one piece of distributed information Dc = 16 of the data D is generated.

Note that the data D = 28 cannot be estimated from either one of the two pieces of information Dp = 12 and Dc = 16.

In this manner, the distributed information Dc of the data D can be generated using various methods other than the above-described exclusive-or operation (XOR).

In step S103, the data providing device 100 generates the distributed information Dc of the data D and transmits the distributed information Dc to the data collecting device 200.

(Step S104)

In step S103, the data collecting device 200 which receives the distributed information Dc of the data D from the data providing device 100 generates the distributed information Cp of the "data value examination criterion (C)" in step S104, and transmits the distributed information Cp to the data providing device 100.

Note that processing of generating the distributed information Cp of the data value examination criterion C is executed using a method similar to that for processing of generating the distributed information Dc of the data D described as the processing in step S103.

That is, the data value examination criterion C is divided into two pieces of information Cp and Cc.

Note that the data value examination criterion C cannot be estimated from either one of the two pieces of information Cp and Cc.

Specifically, for example, as will be described below, Cc is selected so that the data value examination criterion C is calculated from exclusive-or operation (XOR) of Cp and Cc.

$$C = Cp(XOR)Cc$$

In the above-described equation, (XOR) means exclusive-or operation of Cp and Cc.

Alternatively, the data value examination criterion C is set as residual data: mod m of a value m specified in advance.

$$C = (Cp + Cc)mod\_m$$

The distributed information Cp of the data value examination criterion C is generated in accordance with the above-described equation.

In this manner, the distributed information Cp which is set so that the data value examination criterion C cannot be estimated from either one of the two pieces of information Cp and Cc is generated.

Note that the data value examination criterion C is data value examination algorithm C for calculating value based on various kinds of data D.

Specifically, for example, the data value examination criterion C corresponds to the function f(D, C) for calculating the output value (output) = f(D, C) described with reference to Fig. 5 and Fig. 6.

For example, in a case where the function f(D, C) is such a function that

$$f(D, C) = sD^2 + tD + u,$$

the data providing device 100 finally obtains a value (= a data value index value) as a calculation result of the function f(D, C) through secure calculation to be executed between the data providing device 100 and the data collecting device 200.

In the secure calculation processing from steps S103 to S106, processing of calculating the above-described function: f(D, C) = sD² + tD + u is performed.

Upon this secure calculation processing,

the data providing device 100 provides distributed information of the data D of the function: f(D, C) = sD² + tD + u to the data collecting device 200.

Meanwhile, the data collecting device 200 provides distributed information of each of parameters s, t, and u of the function: f(D, C) = sD² + tD + u to the data providing device 100.

The processing of transmitting the distributed information Cp of the "data value examination criterion (C)" for the data providing device 100 from the data collecting device 200 to the data providing device 100 in step S104 is, for example, processing of providing parameters necessary for generating a final calculation value of the above-described function f(D, C).

While, in the sequence diagram illustrated in Fig. 13, the data providing device 100 and the data collecting device 200 respectively provide distributed information in step S103 and step S104 once, this processing of providing distributed information is executed a plurality of times as necessary in process of calculation processing of the secure calculation.

For example, the distributed information of each of the parameters s, t, and u of the function: f(D, C) = sD² + tD + u is sequentially provided from the data collecting device 200 to the data providing device 100 in process of execution of the secure calculation, and, finally, the data providing device 100 can obtain a value (= a data value index value) as a calculation result of the function f(D, C) .

Therefore, as specific processing, in each equation of
C = Cp(XOR)Cc
which is an equation to which the above-described exclusive-or operation (XOR) is applied, or

$$C = (Cp + Cc) \mathrm{mod\_m}$$

which is an equation to which residual data is applied,
C is, for example, utilized in place of the above-described plurality of parameters s, t, and u.

That is, processing of individually generating distributed information of the above-described plurality of parameters s, t, and u in accordance with the above-described equation, and sequentially transmitting the distributed information to the data providing device 100 is performed.

In this manner, the data collecting device 200 which receives the distributed information Dc of the data D from the data providing device 100 in step S103 generates the distributed information Cp of the "data value examination criterion (C)" or an element of the distributed information Cp in step S104 and transmits the distributed information Cp or the element to the data providing device 100.

(Steps S105-1 to S105-k)

Processing from steps S105-1 to S105-k is processing of calculating, transmitting, and receiving an intermediate value to be executed in the secure calculation processing to be executed between the data providing device 100 and the data collecting device 200.

Note that there are the following three types of the intermediate value generated in the secure calculation.
$I_{si}$: an intermediate value shared between the data providing device and the data collecting device (where i = 1, 2, ..., k)
$I_{pi}$: an intermediate value held only by the data providing device (where i = 1, 2, ..., 1)
$I_{ci}$: an intermediate value held only by the data collecting device (where i = 1, 2, ..., m)
These intermediate values are generated until a time point in the process of executing the secure calculation.

Finally, the data providing device 100 calculates one piece of distributed information $r_p$ out of two pieces of distributed information $r_p$ and $r_c$ constituting a calculation result (data value index value) of the function: f(D, C) for calculating the output value (output) of the secure calculation by using two types of intermediate values of
$I_{si}$: the intermediate value shared between the data providing device and the data collecting device, and
$I_{pi}$: the intermediate value held only by the data providing device,
and applying a function $g_p$ specified in advance.

That is, one piece of distributed information $r_p$ constituting a calculation result value (data value index value) of f(D, C) is calculated in accordance with the following equation:

$$r_p = g_p (I_{s1}, \ldots, I_{sk}, I_{p1}, \ldots, I_{p1})$$

Note that the calculation result value (data value index value) of f(D, C) can be generated using the following calculation equation using two pieces of distributed information $r_p$ and $r_c$ constituting the calculation result value (data value index value) of f(D, C).

$$f(D, C) = r_p (XOR) r_c$$

Note that, in the above-described equation, (XOR) is exclusive-or operation.

Further, $r_p$ and $r_c$ are both data expressed with a binary value having a predetermined bit depth, for example, eight bits, and the exclusive-or operation is performed using data at corresponding bit positions of each data. The value calculated by the above-described equation is an output value (output) of the secure calculation, that is, the calculation result value of the function: f(D, C), that is, the data value index value.

Specifically, for example, the value is a binary of 0 indicating valueless or 1 indicating valuable, or an index value for data value determination such as value: v = 0 to 1, v = 0 yen to 1000 yen, and v = \$0 to \$100.

Note that relationship between the calculation result value (data value index value) of f(D, C) and the two pieces of distributed information $r_p$ and $r_c$ is only required to satisfy conditions that the calculation result value (data value index value) of f(D, C) can be calculated from the two pieces of distributed information $r_p$ and $r_c$, and the calculation result value (data value index value) of f(D, C) cannot be calculated from either one of the two pieces of distributed information $r_p$ and $r_c$.

That is, relationship between f(D, C) and the two pieces of distributed information $r_p$ and $r_c$ is not limited to that defined by a relational expression using the above-described exclusive-or operation (XOR), and may be relationship defined by a relational expression to which residual data mod is applied in a similar manner to correspondence relationship between the distributed information Dp and Dc of the data D and distributed information Cp and Cc of the examination criterion C described above in step S103 and step S104.

Meanwhile, the data collecting device 200 calculates one piece of distributed information $r_c$ out of two pieces of distributed information $r_p$ and $r_c$ constituting a calculation result (data value index value) of the function: f(D, C) for calculating the output value (output) of the secure calculation by using two types of intermediate values of

$I_{si}$: the intermediate value shared between the data providing device and the data collecting device, and

$I_{ci}$: the intermediate value held only by the data collecting device,

and applying a function $g_c$ specified in advance.

That is, one piece of distributed information $r_c$ constituting the calculation result value (data value index value) of the function: f(D, C) for calculating the output value (output) of secure calculation is calculated in accordance with the following equation:

$$r_c = g_c (I_{s1}, ..., I_{sk}, I_{c1}, ... I_{cm})$$

(Step S106)

The data collecting device 200 then transmits one piece of distributed information $r_c$ of f(D, C) finally calculated in the intermediate value calculation processing from the above-described steps S105-1 to step S105-k, that is, the above-described distributed information $r_c$

$$r_c = g_c (I_{s1}, ..., I_{sk}, I_{c1}, ..., I_{cm})$$

to the data providing device 100.

The data providing device 100 calculates the calculation result value (data value index value) of f(D, C) by applying the two pieces of distributed information of

one piece of distributed information $r_c$ constituting the calculation result value (data value index value) of f(D, C), and

another piece of distributed information $r_p$ constituting the calculation result value (data value index value) of f(D, C) acquired in the final step of the intermediate value calculation step from steps S105-1 to step S105-k,

received from the data collecting device 200.

That is, the calculation result value (data value index value) of the function: f(D, C) is calculated in accordance with the following equation:

$$f(D, C) = r_p (XOR) r_c$$

The value calculated in accordance with the above-described equation corresponds to the output value (output) of the secure calculation for the data D.

That is, the output value (output) = f(D, C) is, for example, a binary of 0 indicating valueless or 1 indicating valuable, or value: v = 0 to 1, v = 0 yen to 1000 yen, v = $0 to $100, or the like, and the data value index value for the data D can be calculated.

Note that, here, the output value (output) = f(D, C) obtained at the data providing device 100 is the output value (output) = f(D, C) indicating the data value index value for the input data input at the data providing device 100 upon the examination request in the previous step S101.

That is, the output value (output) = f(D, C) is the output value (output) = f(D, C) for the input data (attribute value) corresponding to the attribute name transmitted from the data providing device 100 to the data collecting device 200 upon the examination request in step S101.

The data providing device 100 outputs this output value (output) = f(D, C) to the output unit 104. Through this processing, the user (data provider) on the data providing device 100 side can confirm value of the input data.

As a result of these kinds of processing, the user (data provider) on the data providing device 100 side can confirm whether or not the "data D" to be provided to the data collecting device 200 satisfies the "data value examination criterion C" specified on the data collecting device 200 side, that is, whether or not the "data D" is acknowledged as valuable.

This confirmation processing is performed under the following conditions.

(Condition 1) The data D is not provided from the data providing device 100 to the data collecting device 200.
(Condition 2) The data value examination criterion C is not provided from the data collecting device 200 to the data providing device 100.

That is, the user (data provider) on the data providing device 100 side can confirm value of the "data D" to be provided without the data providing device 100 and the data collecting device 200 disclosing secure data.

[6. Configuration for preventing overlapped access from data providing device]

As described with reference to the sequence diagram illustrated in Fig. 13, if the above-described secure calculation is used, the data providing device 100 can confirm value of input data without providing the input data to the data collecting device 200.

The user (data provider) on the data providing device 100 side can also confirm the output values (output), that is, the data value, corresponding to different attribute values (input data) having the same attribute name.

However, if, for example, a malicious user performs processing of confirming the output values (output), that is, the data value, corresponding to a number of different attribute values (input data) having the same attribute name, the malicious user can recognize data value corresponding to a number of different pieces of data, and, as a result, there is a possibility that the "data value examination criterion C" which is confidential information on the data collecting device 200 side may be estimated.

For example, if a malicious user obtains output values (output) by executing the above-described secure calculation for all possible attribute values which can be attribute values corresponding to certain attribute name, the "data value examination criterion C" leaks out.

An example for solving this problem will be described below.

To solve this problem, the data collecting device 200 stores an access log regarding examination requests received from the data providing device 100 in the storage unit 203 of the data collecting device 200.

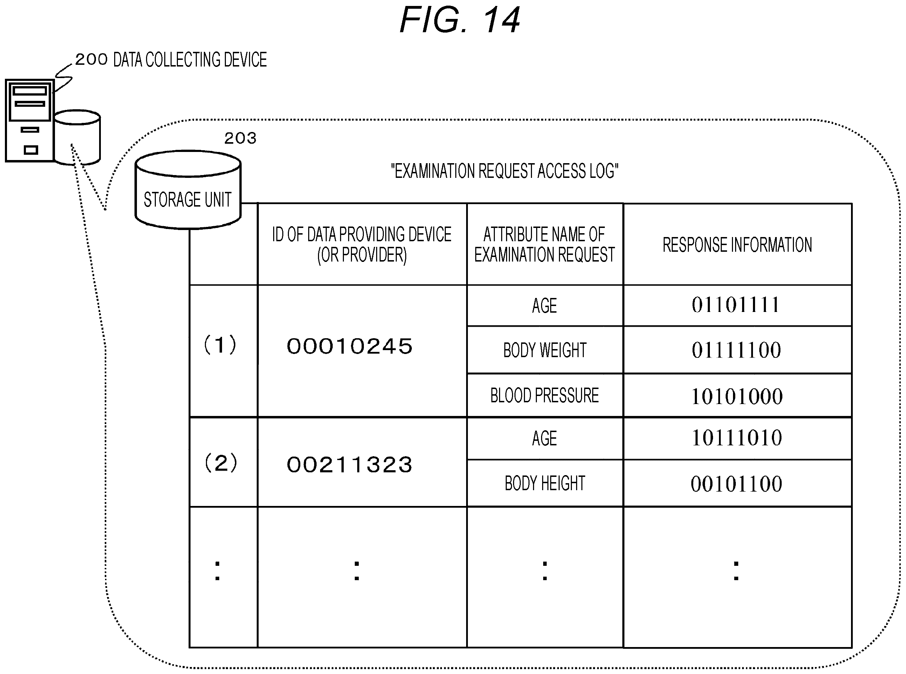

An example of the access log of the examination requests stored in the storage unit 203 of the data collecting device 200 will be described in Fig. 14.

As illustrated in Fig. 14, the following data is recorded in the access log in association with each other.

(a) ID (identifier) of a data providing device (or a data provider) which has made an examination request
(b) attribute name of data for which an examination request is made
(c) response information ($r_{ic}$) provided by the data collecting device to the data providing device as a result of processing of the examination request

The above-described data is recorded in the storage unit 203 of the data collecting device 200 as the access log of the examination requests.

Note that "(a) ID (identifier) of the data providing device (or the data provider) which has made the examination request" is transmitted from the data providing device 100 to the data collecting device 200 along with the examination request in step S101 in the sequence diagram illustrated in Fig. 13. Alternatively, it is also possible to employ a setting so that the ID is received upon establishment of a communication session to be executed between the data providing device 100 and the data collecting device 200 before the examination request processing in step S101.

In a case where the data collecting device 200 receives a new examination request from the data providing device 100, the data collecting device 200 refers to the access log illustrated in Fig. 14 and confirms whether or not an examination request having the same attribute name from the data providing device (or the data provider) having the same ID as that of the new examination request is registered.

In a case where an examination request having the same attribute name from the data providing device (or the data provider) having the same ID as that of the new examination request is registered as the access log, it is determined that the examination request is a malicious examination request aimed at analysis of the "data value examination criterion C".

In this case, the data collecting device 200 notifies the data providing device 100 that examination cannot be performed because access is overlapped.

Alternatively, the data collecting device retransmits response information ($r_{ic}$) provided to the data providing device as response information which has been registered in the access log, that is, a processing result of an examination request which has been performed in the past.

In this manner, by the data collecting device 200 storing the examination request access log in the storage unit 203, and determining whether or not processing can be performed by comparing a new examination request with past examination request data recorded in the access log upon reception of the new examination request, it is possible to prevent attack from a malicious user and prevent analysis of the "data value examination criterion C" which is confidential information on the data collecting device 200 side.

[7. Processing sequence in configuration where a plurality of data value examination criteria is applied]

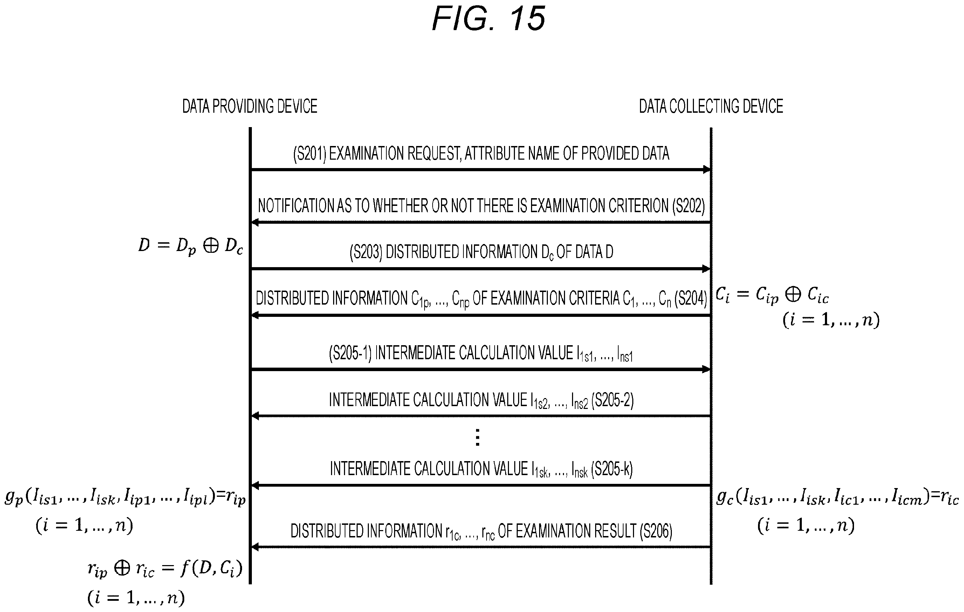

A processing sequence in a configuration where a plurality of data value examination criteria is applied will be described next with reference to the sequence diagram illustrated in Fig. 15.

The data value examination criterion to be utilized at the data collecting device 200 can change in accordance with change of demand for data by the data user.

In a case where the data collecting device 200 changes the data value examination criterion, even if the data provided by the data providing device 100 is the same, data value changes.

However, when the above-described secure calculation is used, the data collecting device 200 side cannot directly confirm content of data to be provided from the data providing device 100.

Therefore, in a case where the data collecting device 200 changes the data value examination criterion, to confirm new data value based on the changed data value examination criterion, it is necessary to repeat the secure calculation processing again.

As described above, the secure calculation processing is processing accompanied by communication between the data providing device 100 and the data collecting device 200. Because there are a number of data providing devices 100, it is problematic if the data collecting device 200 executes secure calculation accompanied by communication with a number of data providing devices 100 at the same time at a timing at which the data value examination criterion is changed, because system load and communication load are increased.

An example described below is an example for solving this problem.

The example described below has a configuration where secure calculation to be executed on the basis of the examination request from the data providing device 100 and presentation of the examination result for the data providing device 100 based on the secure calculation are executed using a plurality of different data value examination criteria, for example,

n different data value examination criteria C1 to Cn of

the data value examination criterion C1,

the data value examination criterion C2,

...,

a data value examination criterion Cn.

According to this configuration, the data providing device 100 can confirm a plurality of different types of data value corresponding to the plurality of different data value examination criteria on the basis of a single examination request.

Fig. 15 is a sequence diagram explaining processing to be executed between the data providing device 100 and the data collecting device 200 of the present example.

Fig. 15 is a sequence diagram explaining a sequence of processing to be executed between the data providing device 100 illustrated on a left side and the data collecting device 200 illustrated on a right side in a similar manner to Fig. 13 described above.

Processing is sequentially performed in order from steps S201 to S206 between the devices.

Details of the processing of the respective steps illustrated in this sequence diagram will be sequentially described.

Note that processing similar to processing described with reference to Fig. 13 will be described in a simplified manner.

(Steps S201 to S202)

Because processing from steps S201 to S202 is similar to the processing from steps S101 to S103 described above with reference to Fig. 13, the processing will be described in a simplified manner.

Step S201 is processing of transmitting an examination request from the data providing device 100 to the data collecting device 200.

Note that, upon this examination request, attribute name of input data is transmitted in place of the input data itself input at the input unit 101 of the data providing device 100.

Step S202 is processing in which the data collecting device 200 notifies the data providing device 100 of presence or absence of an examination criterion.

When receiving the examination request from the data providing device 100 in step S201, the data collecting device 200 confirms whether or not the examination criterion corresponding to the attribute name received upon the examination request is stored in the storage unit 203, at the examination request processing unit 211.

If the examination criterion is not stored, because it is impossible to perform data value determination, the data collecting device 200 notifies the data providing device 100 that value determination cannot be performed because the examination criterion does not exist, via the communication unit 201 in step S202, and finishes the processing.

Meanwhile, in a case where it is confirmed that the examination criterion corresponding to the attribute name received upon the examination request is stored in the storage unit 203, the data collecting device 200 notifies the data providing device 100 that the examination criterion exists, and value determination is started, via the communication unit 201 in step S202, and executes processing of the next step S103 and subsequent steps.

(Step S203)

When receiving a notification that the examination criterion exists and value determination is started, from the data collecting device 200 in step S202, the data providing device 100 starts secure calculation processing for determining value of the input data.

Processing from steps S203 to S206 is a step of executing secure calculation processing for determining value of the input data.

In the present example, secure calculation to be executed on the basis of the examination request from the data providing device 100 and examination result calculation based on the secure calculation are executed using a plurality of different data value examination criteria of the data collecting device 200, for example,

n different data value examination criteria C1 to Cn of

the data value examination criterion C1,

the data value examination criterion C2,

...:,

the data value examination criterion Cn.

By performing this processing, the data providing device 100 can confirm a plurality of different types of data value corresponding to the plurality of different data value examination criteria on the basis of a single examination request.

From steps S203 to S206, value of the "data D" to be provided by the data providing device 100 to the data collecting device 200 is determined on the basis of a plurality of (n) "data value examination criteria C1 to Cn" specified on the data collecting device 200 side, and secure calculation for obtaining a plurality of (n) pieces of output (output) indicating the data value is performed.

Note that this secure calculation is performed so that the following conditions are satisfied.

(Condition 1) The data D is not provided from the data providing device 100 to the data collecting device 200.

(Condition 2) The data value examination criteria C1 to Cn are not provided from the data collecting device 200 to the data providing device 100.

Note that the "data D" to be provided to the data collecting device 200 is input data (attribute value) corresponding to the "attribute name" transmitted when the data providing device 100 performs processing of transmitting the examination request to the data collecting device in step S201.

Further, the "data value examination criteria C1 to Cn" is a plurality of different "data value examination criteria C1 to Cn" corresponding to the above-described "attribute name" acquired by the data collecting device 200 from the storage unit 203 when a notification that there is an examination criterion or there is no examination criterion is made in step S202.

The processing in step S203 is processing in which the data providing device 100 transmits distributed information Dc of the data D to the data collecting device 200.

The data D is input data (attribute value) corresponding to the "attribute name" transmitted when the data providing device 100 performs processing of transmitting the examination request to the data collecting device in step S201.

Processing of generating distributed information Dc of the data D is processing similar to processing in step S103 described above with reference to Fig. 13.

That is, for example, the data D is divided into two pieces of information Dp and Dc which satisfy the following equation:

$$D = Dp(XOR)Dc$$

Note that the data D cannot be estimated from either one of the two pieces of information Dp and Dc.

As the above-described equation, Dc is selected so that data D is calculated from exclusive-or operation (XOR) of Dp and Dc.

In the above-described equation, (XOR) means exclusive-or operation of Dp and Dc.

Further, D, Dp, and Dc are all data expressed as a binary number having a predetermined bit depth, for example, eight bits, and the exclusive-or operation is performed using data at corresponding bit positions of each data.

Alternatively, the data D is set as residual data: mod m of a value m specified in advance.

$$D = (Dp + Dc) \bmod\_m$$

In the above-described equation, Dp is uniformly and randomly selected from 0 to (m-1), and Dc is determined so that

$$Dc = (D - (Dp)) \bmod m$$

is satisfied.

In this manner, two pieces of distributed information (Dp) and (Dc) are generated.

In this manner, a method for generating the distributed information Dc of the data D can use various methods.

In step S203, the data providing device 100 generates the distributed information Dc of the data D and transmits the distributed information Dc to the data collecting device 200.

(Step S204)

In step S203, the data collecting device 200 which receives the distributed information Dc of the data D from the data providing device 100

generates the distributed information C1p to Cnp of the plurality of "data value examination criteria C1 to Cn)" in step S204, and transmits the distributed information C1p to Cnp to the data providing device 100.

Note that the processing of generating the distributed information C1p to Cnp of the data value examination criteria C1 to Cn are only required to be performed by performing processing of generating the distributed information Cp of one data value examination criterion C in step S104 described above with reference to Fig. 13 for each of n data value examination criteria C1 to Cn.

That is, for example, the data value examination criterion C1 is divided into two pieces of information C1p and C1c.

Note that the data value examination criterion C cannot be estimated from either one of the two pieces of information C1p and C1c.

Specifically, for example, as will be described below, C1p is selected so that the data value examination criterion C1 is calculated from exclusive-or operation (XOR) of C1p and C1c.

$$C1 = C1p(XOR)C1c$$

In the above-described equation, (XOR) means exclusive-or operation of C1p and C1c.

Alternatively, the data value examination criterion C1 is set as residual data: mod m of a value m specified in advance.

$$C1 = (C1p + C1c) \bmod\_m$$

The distributed information Cp of the data value examination criterion C1 is generated in accordance with the above-described equation.

In this manner, the distributed information C1p which is set so that the data value examination criterion C1 cannot be estimated from either one of the two pieces of information C1p and C1c is generated.

Similar processing is performed for other data value examination criteria C2 to Cn, and n pieces of distributed information C1p to Cnp corresponding to n data value examination criteria C1 to Cn are generated and transmitted to the data providing device 100.

(Steps S205-1 to S205-k)

Processing from steps S205-1 to S205-k is processing of calculating, transmitting, and receiving an intermediate value to be executed in the secure calculation processing to be executed between the data providing device 100 and the data collecting device 200.

This processing is substantially similar to processing from steps S105-1 to S105-k described above with reference to Fig. 13.

However, concerning the intermediate value, calculation, transmission, and reception of the intermediate value corresponding to each of the n data value examination criteria C1 to Cn are executed.

Note that there are the following three types of the intermediate value generated in the secure calculation.

$I_{1si}$ to $I_{nsi}$: an intermediate value shared between the data providing device and the data collecting device (where i = 1, 2, ..., k)

$I_{1pi}$ to $I_{npi}$ : an intermediate value held only by the data providing device (where i = 1, 2, ..., l)

$I_{1ci}$ to $I_{nci}$: an intermediate value held only by the data collecting device (where i = 1, 2, ..., m)

These intermediate values are generated until a time point in the process of executing the secure calculation.

Finally, the data providing device 100 calculates one kind of distributed information $r_{1p}$ to $r_{np}$ among two kinds of distributed information $r_{1p}$, $r_{1c}$ to $r_{np}$, and $r_{nc}$ for each of the functions: f(D, C1) to f(D, Cn) for calculating output values 1 to n (output-1 to output-n) of secure calculation respectively corresponding to the n data value examination criteria C1 to Cn by applying a function $g_p$ specified in advance using two types of intermediate values:

$I_{1si}$ to $I_{nsi}$: intermediate values shared between the data providing device and the data collecting device, and
$I_{1i}$ to $I_{npi}$: intermediate values held only by the data providing device,
respectively corresponding to the n data value examination criteria C1 to Cn.

That is, for example, concerning the data value examination criteria C1, one piece of distributed information $r_{1p}$ of the function: f(D, C1) for calculating the output value (output) of the secure calculation is calculated in accordance with the following equation:

$$r_{1p} = g_p (I_{1s1}, \ldots, I_{1sk}, I_{1p1}, \ldots, I_{1pl})$$

Concerning the data value examination criterion C2, one piece of distributed information $r_{2p}$ of the function: f(D, C2) for calculating the output value (output) of the secure calculation is calculated in accordance with the following equation:

$$r_{2p} = g_p (I_{2s1}, \ldots, I_{2sk}, I_{2p1}, \ldots, I_{2pl})$$

Hereinafter, also concerning the data value examination criteria C3 to Cn, in a similar manner, distributed information $r_{3p}$ to $r_{np}$ respectively corresponding to the functions: f(D, C3) to f(D, Cn) for calculating the output values (output) of secure calculation corresponding to the data value examination criteria C3 to Cn are calculated.

Meanwhile, the data collecting device 200 calculates one kind of distributed information $r_{1c}$ to $r_{nc}$ among two kinds of distributed information $r_{1p}$, $r_{1c}$ to $r_{np}$, and $r_{nc}$ for each of the functions: f(D, C1) to f(D, Cn) for calculating output values 1 to n (output-1 to output-n) of secure calculation respectively corresponding to the n data value examination criteria C1 to Cn by applying a function $g_c$ specified in advance using two types of intermediate values:

$I_{1si}$ to $I_{nsi}$: intermediate values shared between the data providing device and the data collecting device, and
$I_{1ci}$ to $I_{nci}$: intermediate values held only by the data collecting device,
respectively corresponding to the n data value examination criteria C1 to Cn.

That is, for example, concerning the data value examination criterion C1, one piece of distributed information $r_{1c}$ of the function: f(D, C1) for calculating the output value (output-1) of secure calculation corresponding to the data value examination criterion C1 is calculated.

$$r_{1c} = g_c (I_{1s1}, \ldots, I_{1sk}, I_{1c1}, \ldots, I_{1cm})$$

Concerning the data value examination criterion C2, one piece of distributed information $r_{2c}$ of the function: f(D, C2) for calculating the output value (output-2) of secure calculation corresponding to the data value examination criterion C2 is calculated.

$$r_{2c} = g_c (I_{2s1}, ..., I_{2sk}, I_{2c1}, ..., I_{2cm})$$

Hereinafter, also concerning the data value examination criteria C3 to Cn, in a similar manner, distributed information $r_{3c}$ to $r_{nc}$ respectively corresponding to the functions: f(D, C3) to f(D, Cn) for calculating the output values (output) of secure calculation corresponding to the data value examination criteria C3 to Cn are calculated.

(Step S206)

Then, the data collecting device 200 transmits, to the data providing device 100, distributed information $r_{1c}$ to $r_{nc}$ of the respective functions: f(D, C1) to f(D, Cn) for calculating the output values (output-1 to output-n) of secure calculation of the data value examination criteria C1 to Cn,
finally calculated in intermediate value calculation processing from the above-described steps S205-1 to S205-k, that is, n pieces of distributed information $r_{1c}$ to $r_{nc}$ respectively corresponding to the data value examination criteria C1 to Cn:

$$r_{1c} = g_c (I_{1s1}, ..., I_{1sk}, I_{1c1}, ..., I_{1cm});$$
$$r_{2c} = g_c (I_{2s1}, ..., I_{2sk}, I_{2c1}, ..., I_{2cm});$$
$$\vdots \qquad \qquad \vdots$$
$$r_{nc} = g_c (I_{ns1}, ..., I_{nsk}, I_{nc1}, ..., I_{ncm}).$$

The data providing device 100 calculates calculation values (= data value index values)
based on the output values (output-1 to output-n) respectively corresponding to the data value examination criteria C1 to Cn, that is, the functions: f(D, C1) to f(D, Cn) by applying n pieces of distributed information $r_{1c}$ to $r_{nc}$ respectively corresponding to the data value examination criteria C1 to Cn
received from the data collecting device 200 and
another n pieces of distributed information $r_{1p}$ to $r_{np}$ respectively corresponding to the data value examination criteria C1 to Cn acquired in the final step of the intermediate value calculation step from steps S205-1 to S205-k.
That is, for example, concerning the data value examination criterion C1, the calculation value (= data value index value) by the function: f(D, C1) which is the output value (output-1) is calculated in accordance with the following equation:

$$f(D, C1) = r_{1p} (XOR) r_{1c}$$

The value: f(D, C1) calculated in accordance with the above-described equation corresponds to the output value (output) of secure calculation for the data D.
That is, as the output value (output) = f(D, C1), for example, a binary of 0 indicating valueless or 1 indicating valuable, or an index value for data value determination such as value: v = 0 to 1, v = 0 yen to 1000 yen, and v = \$0 to \$100, can be calculated.
Also concerning other data value examination criteria C2 to Cn, similar processing is performed to calculate calculation values (= data value index values) in accordance with the functions: f(D, C2) to f(D, Cn).
Note that, here, the output values (output-1 to output-n) = f(D,C1) to f(D, Cn) obtained at the data providing device 100 are output values (output-1 to output-n) = f(D, C1) to f(D, Cn) corresponding to the n data value examination criteria C1 to Cn for input data input at the data providing device 100 upon the examination request in the previous step S201.
That is, the output values (output-1 to output-n) = f(D, C1) to f(D, Cn) are output values (output-1 to output-n) = f(D, C1) to f(D, Cn) corresponding to the n data value examination criteria C1 to Cn for input data (attribute value) corresponding to the attribute name transmitted from the data providing device 100 to the data collecting device 200 upon the examination request in step S201, and are value index values of the data D determined in accordance with the respective n data value examination criteria C1 to Cn.
The data providing device 100 stores these output values (output-1 to output-n) = f(D, C1) to f(D, Cn) corresponding to the n data value examination criteria C1 to Cn in the storage unit 105 in association with IDs (ID1, ..., IDn) of the data value examination criteria, and outputs the output values to the output unit 104 as necessary. Through this processing, the user (data provider) on the data providing device 100 side can confirm value corresponding to a plurality of different n data value examination criteria C1 to Cn as value of the input data.

Meanwhile, the data collecting device 200 stores IDs of the data providing devices 200 (or the data providers), IDs (ID1, ..., IDn) of the data value examination criteria, and the data value examination criteria C1 to Cn in the storage unit 203.

By these kinds of data being stored, it is possible to avoid execution of overlapped processing on data corresponding to the same attribute from the same data providing device 200 (or the data provider), so that it is possible to prevent analysis of the data value examination criterion.

As a result of these kinds of processing, the user (data provider) on the data providing device 100 side can confirm value of the "data D" to be provided to the data collecting device 200, based on a plurality of examination criteria.

That is, even in a case where the data value examination criterion C1 is changed to the data value examination criterion C2, it is possible to immediately confirm value based on the new data value examination criterion C2 without executing secure calculation again.

Note that, in a case where the data collecting device 200 performs processing of updating the data value examination criterion C, the data collecting device 200 notifies the data providing device 100 of updating of the data value examination criterion.

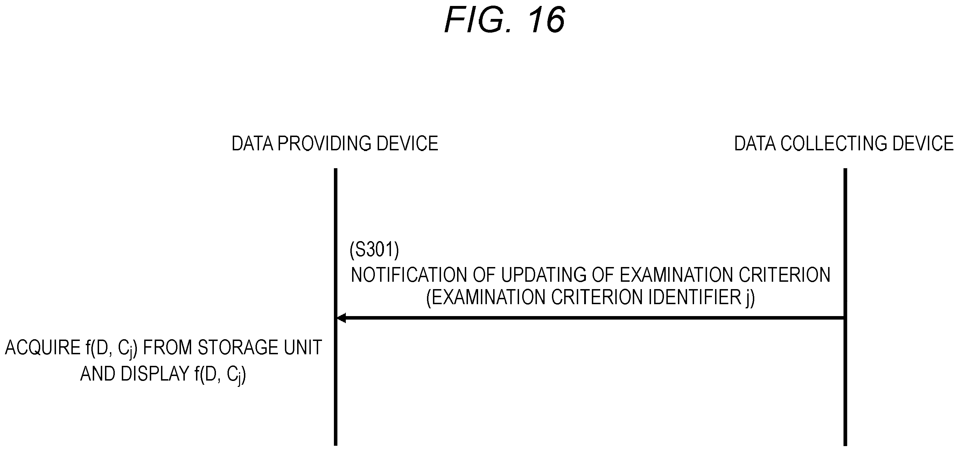

A sequence of this notification of updating of the data value examination criterion will be described with reference to Fig. 16.

Fig. 16 illustrates the data providing device 100 on a left side and the data collecting device 200 on a right side.

As illustrated in step S301 in Fig. 16, in a case where the data collecting device 200 performs processing of updating the data value examination criterion C, the data collecting device 200 notifies the data providing device 100 of updating of the data value examination criterion.

Upon this updating notification processing, the data collecting device 200 notifies the data providing device 100 of an identifier of the updated data value examination criterion which becomes newly valid.

The example illustrated in Fig. 16 is an example where the data collecting device 200 notifies the data providing device 100 of an identifier (J) of the updated data value examination criterion which becomes newly valid.

When receiving the notification of updating of the data value examination criterion accompanied by the identifier (j) of the updated data value examination criterion from the data collecting device 200, the data providing device 100 acquires the data value examination criterion Cj from the storage unit 105 on the basis of the identifier (j) and displays the data value examination criterion Cj.

Through this processing, it is possible to immediately confirm value based on the new data value examination criterion Cj without executing secure calculation again.

[8. Device configuration configured to execute updating of data value examination criterion]

Device configurations of the data providing device 100 and the data collecting device 200 configured to execute updating of the data value examination criterion will be described next.

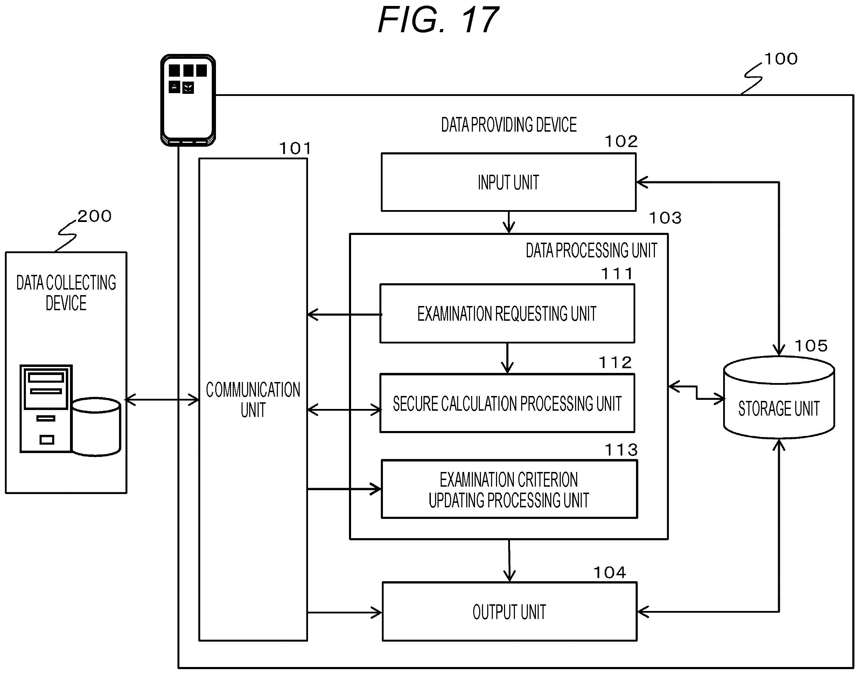

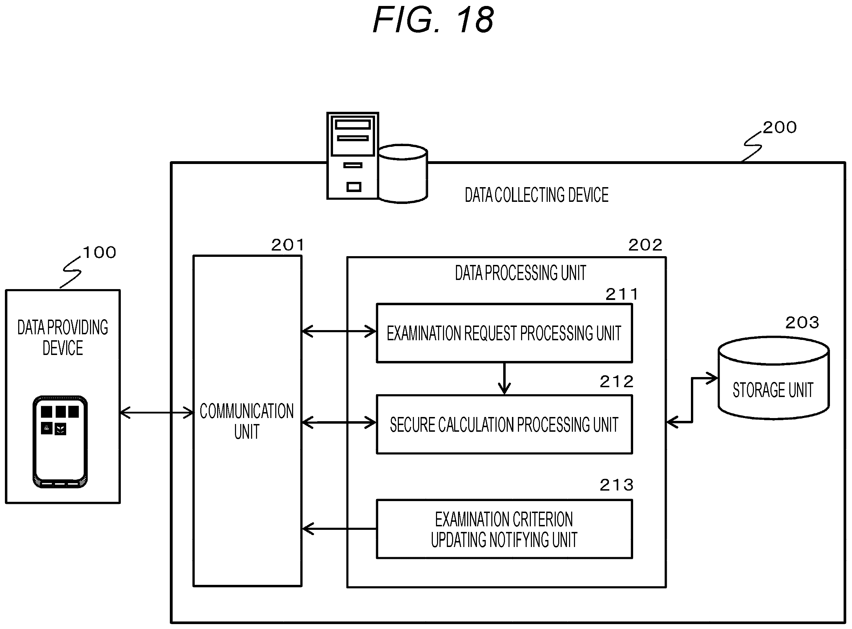

Configurations of the data providing device 100 and the data collecting device 200 will be described with reference to Fig. 17 and Fig. 18.

A configuration example of the data providing device 100 will be described first with reference to Fig. 17.

The data providing device 100 illustrated in Fig. 17 has a configuration where an examination criterion updating processing unit 113 is added to the data providing device 100 described above with reference to Fig. 9.

As illustrated in Fig. 17, the data providing device 100 includes the communication unit 101, the input unit 102, the data processing unit 103, the output unit 104, and the storage unit 105.

Further, the data processing unit 103 includes the examination requesting unit 111, the secure calculation processing unit 112, and further, the examination criterion updating processing unit 113.

The communication unit 101 executes data communication with a data collecting device 200. For example, the communication unit 101 executes communication processing via a communication network such as the Internet.

The communication unit 101, for example, executes data communication with the data collecting device 200 upon execution of the secure calculation processing or the like.

The input unit 101 inputs, for example, an input value upon execution of the secure calculation to the data processing unit 103. The input value is directly input by the user. Alternatively, data stored in the storage unit 105 may be input to the data processing unit 103 as the input value.

The data processing unit 103 includes the examination requesting unit 111, the secure calculation processing unit 112, and further, the examination criterion updating processing unit 113.

The examination requesting unit 111 outputs an examination request of value of the input value input at the input unit 101, that is, value acknowledged on the basis of the "data value examination criterion" of the data collecting device 200 to the data collecting device 200 via the communication unit 101.

In response to output of the examination request to the data collecting device 200 by the examination requesting unit 111, the secure calculation processing unit 112 executes secure calculation with the data collecting device 200 in a case where the examination request is accepted from the data collecting device 200.

The secure calculation processing unit 112 obtains

the output value (output) = f(D, C)

as a result of the secure calculation.

The output value (output) = f(D, C) is, for example, as explained above with reference to Figs. 5 and 6, a binary of 0 indicating valueless or 1 indicating valuable, or an index value of data value determination, such as value: v = 0 to 1, v = 0 yen to 1000 yen, and v = $0 to $100.

The examination criterion updating processing unit 113 executes processing in a case where the data value examination criterion to be applied is updated at the data collecting device 200 is updated.

In a case where the data collecting device 200 updates the data value examination criterion to be applied, for example, in a case where the data collecting device 200 stops application of the data value examination criterion C1 and is to start application of the data value examination criterion C2, the data collecting device 200 notifies the data providing device 100 of updating of the examination criterion.

That is, the data collecting device 200 makes a notification of updating of the examination criterion indicating that application of the data value examination criterion C1 is stopped, and application of the data value examination criterion C2 is to be started.

When receiving input of the notification of updating of the examination criterion from the data collecting device 200, the examination criterion updating processing unit 113 of the data providing device 100 searches the storage unit 105 to confirm whether or not an output value (output-2) = f(D, C2) corresponding to the data value examination criterion C2 has been stored.

In a case where it is confirmed that the output value (output-2) = f(D, C2) corresponding to the data value examination criterion C2 has been stored in the storage unit 105, this output value (output-2) = f(D, C2) corresponding to the data value examination criterion C2 is set as valid data.

Further, in a case where an output value (output-1) = f(D, C1) corresponding to the data value examination criterion C1 before updating is stored in the storage unit 105, the output value (output-1) = f(D, C1) is deleted or subjected to invalidation processing.

Note that, in a case where the output value (output-2) = f(D, C2) corresponding to the data value examination criterion C2 is not stored in the storage unit 105, an examination request for acquiring the output value (output-2) = f(D, C2) corresponding to the data value examination criterion C2 is transmitted to the data collecting device 200 as necessary.

The output unit 104 outputs the output value (output) = f(D, C2) or the like, which is a result of the above-described secure calculation. The output unit 104 is specifically configured with a display unit and a speech output unit.

The storage unit 105 stores a program, a parameter, to be applied to secure calculation processing to be executed at the data processing unit 103 or other data processing, further, the output values (output-1 to output-n) = f(D, C1) to f(D, Cn) corresponding to the data value examination criteria C1 to Cn which are results of secure calculation executed in the past, or the like. Further, the storage unit 105 is also utilized as a work area for data processing to be executed at the data processing unit 103.

The configuration example of the data collecting device 200 will be described next with reference to Fig. 18.

The data collecting device 200 illustrated in Fig. 18 has a configuration where an examination criterion updating notifying unit 213 is added to the configuration of the data collecting device 200 described above with reference to Fig. 10.

As illustrated in Fig. 18, the data collecting device 200 includes the communication unit 201, the data processing unit 202, and the storage unit 203.

Further, the data processing unit 202 includes the examination request processing unit 211, the secure calculation processing unit 212, and further, the examination criterion updating notifying unit 213.

The communication unit 201 executes data communication with the data providing device 100 and devices at the ground, for example, the data utilizing device. For example, the communication unit 101 executes communication processing via a communication network such as the Internet.

The communication unit 201, for example, executes data communication with the data providing device 100 upon execution of the above-described secure calculation processing or the like.

The data processing unit 202 includes the examination request processing unit 211, the secure calculation processing unit 212, and further, the examination criterion updating notifying unit 213.

The examination request processing unit 211 receives input of an examination request which is input from the data providing device 100, that is, an examination request as to whether or not the input data at the data providing device 100 is acknowledged as valuable on the basis of the "data value examination criterion" of the data collecting device 200, accepts processing on this examination request, that is, the examination request, and determines whether or not to perform secure calculation of calculating a data value index value of the input data.

The secure calculation processing unit 212 executes secure calculation of calculating a data value index value of the input data for the data providing device 100 in a case where the examination request is accepted at the examination request processing unit 211.

The examination criterion updating notifying unit 213 executes processing in a case where the data value examination criterion to be applied is updated at the data collecting device 200.

In a case where the data value examination criterion to be applied is updated at the data collecting device 200, the examination criterion updating notifying unit 213 notifies the data providing device 100 of updating of the examination criterion.

For example, in a case where application of the data value examination criterion C1 is stopped and application of the data value examination criterion C2 is to be started, the examination criterion updating notifying unit 213 notifies the data providing device 100 of updating of the examination criterion.

That is, the data collecting device 200 makes a notification of updating of the examination criterion indicating that application of the data value examination criterion C1 is stopped, and application of the data value examination criterion C2 is to be started.

The storage unit 203 stores a program, a parameter, or the like, to be applied to secure calculation processing and other data processing to be executed at the data processing unit 202, and is utilized as a work area for data processing to be executed at the data processing unit 103.

Further, data value examination criteria corresponding to each attribute name, for example, the data value examination criteria C1 to Cn, are stored in the storage unit 203.

[9. Hardware configuration example of information processing device]

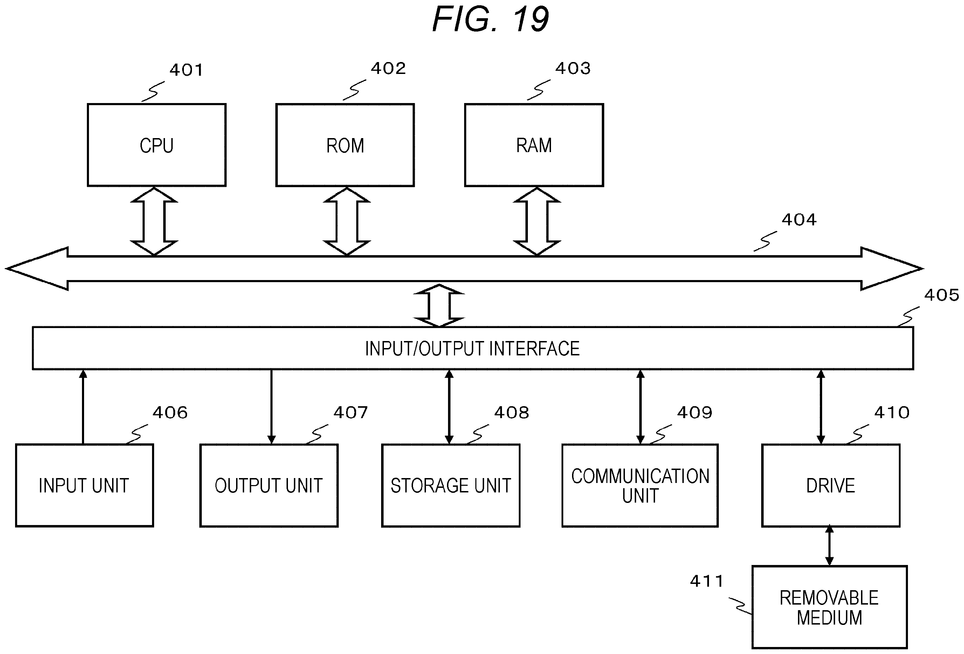

Finally, a hardware configuration example of an information processing device constituting the data providing device, the data collecting device, and the data utilizing device which execute the processing according to the above-described example will be described with reference to Fig. 19.

Fig. 19 is a diagram illustrating a hardware example of an information processing device.

A central processing unit (CPU) 401 functions as a control unit and a data processing unit that executes various processes in accordance with a program stored in read-only memory (ROM) 402 or a storage unit 408. For example, processes following the sequences described in the embodiment described above are executed. Random access memory (RAM) 403 stores programs executed by the CPU 401, data, and the like. The CPU 401, ROM 402, and RAM 403 are interconnected by a bus 404.

The CPU 401 is connected to an input/output interface 405 via the bus 404, and the input/output interface 405 is connected to an input unit 406 including various switches, a keyboard, a mouse, a microphone, and the like, and an output unit 407 including a display, speakers, and the like. The CPU 401 executes various processes in response to commands input from the input unit 406, and outputs processing results to the output unit 407, for example.

The storage unit 408 connected to the input/output interface 405 includes a hard disk or the like, for example, and stores programs executed by the CPU 401 and various data. A communication unit 409 functions as a transmitting/receiving unit for data communication via a network such as the Internet or a local area network, and communicates with external devices.

A drive 410 connected to the input/output interface 405 drives a removable medium 411 such as a magnetic disk, an optical disc, a magneto-optical disc, or semiconductor memory such as a memory card, and executes the recording or reading of data.

[10. Summary of configuration of present disclosure]

The foregoing thus provides a detailed explanation of examples of the present disclosure with reference to specific examples. However, it is obvious that persons skilled in the art may make modifications and substitutions to these examples without departing from the gist of the present disclosure. In other words, the present disclosure has been disclosed by way of example, and should not be interpreted in a limited manner. The gist of the present disclosure should be determined in consideration of the claims.

Additionally, the present technology disclosed in the present specification may also be configured as below.

(1) An information processing device including:

a data processing unit configured to calculate data value of input data D based on a data value examination criterion C; and
a communication unit configured to execute communication with a communication partner device,

in which the data processing unit includes

a secure calculation processing unit configured to execute secure calculation of calculating the data value of the input data D without disclosing the input data D to the communication partner device and without receiving the data value examination criterion C from the communication partner device,

the secure calculation processing unit generates distributed information Dc which is converted data of the input data D and transmits the distributed information Dc to the communication partner device,

receives input of distributed information Cp which is converted data of the data value examination criterion C from the communication partner device, and

executes secure calculation accompanied by communication with the communication partner device to acquire a data value index value which is a calculation result of a data value calculation function f(D, C) of the input data D.

(2) The information processing device according to (1),

in which the secure calculation processing unit generates two pieces of distributed information Dc and Dp which are converted data of the input data D,

receives input of one piece of distributed information Cp out of two pieces of distributed information Cp and Cc which are converted data of the data value examination criterion C generated by the communication partner device, from the communication partner device, and

executes secure calculation utilizing the two pieces of distributed information Dc and Dp of the input data D and the distributed information Cp of the data value examination criterion C to acquire the data value index value which is the calculation result of the data value calculation function f(D, C) of the input data D.

(3) The information processing device according to (1) or (2),

in which the secure calculation processing unit transmits an intermediate value calculated in process of secure calculation to the communication partner device, receives an intermediate value calculated at the communication partner device, and executes secure calculation in which the received intermediate value is applied.

(4) The information processing device according to any one of (1) to (3),

in which the secure calculation processing unit calculates one piece of distributed information rp out of two pieces of distributed information rp and rc constituting the data value index value at an own device, receives the other piece of distributed information rc from the communication partner device, and calculates the data value index value through operation processing in which the two pieces of distributed information rp and rc constituting the data value index value are applied,

as processing of acquiring the data value index value which is the calculation result of the data value calculation function f(D, C) of the input data D.

(5) The information processing device according to any one of (1) to (4),

in which the secure calculation processing unit executes secure calculation of acquiring a plurality of data value index values corresponding to a plurality of different data value examination criteria C1 to Cn for the input data D.

(6) The information processing device according to any one of (1) to (5),

in which the information processing device includes a storage unit configured to store a plurality of data value index values corresponding to a plurality of different data value examination criteria C1 to Cn.

(7) The information processing device according to (6),

in which, in a case where the data processing unit receives a notification of updating of a data value examination criterion from the communication partner device,

the data processing unit acquires a data value index value corresponding to the updated data value examination criterion from the storage unit.

(8) An information processing device including:

a storage unit configured to store a data value examination criterion C; and

a communication unit configured to execute communication with a communication partner device,

in which the data processing unit includes a secure calculation processing unit configured to execute secure calculation of calculating data value of input data D without disclosing the data value examination criterion C to the communication partner device and without receiving the input data D at the communication partner device from the communication partner device, and

the secure calculation processing unit

generates distributed information Cp which is converted data of the data value examination criterion C and transmits the distributed information Cp to the communication partner device,

receives input of distributed information Dc which is converted data of the input data D, from the communication partner device, and

executes secure calculation accompanied by communication with the communication partner device to generate distributed information rc for acquiring a data value index value which is a calculation result of a data value calculation function f(D, C) of the input data D, and transmits the distributed information rc to the communication partner device.

(9) The information processing device according to (8),

in which the secure calculation processing unit generates two pieces of distributed information Cp and Cc which are converted data of the data value examination criterion C,

receives input of one piece of distributed information Dc out of two pieces of distributed information Dc and Dp which are converted data of the input data D, from the communication partner device, and

executes secure calculation utilizing the two pieces of distributed information Cp and Cc which are converted data of the data value examination criterion C and the distributed information Dc of the input data D to generate distributed information rc for acquiring the data value index value which is the calculation result of the data value calculation function f(D, C) of the input data D.

(10) The information processing device according to (8) or (9),

in which the secure calculation processing unit transmits an intermediate value calculated in process of secure calculation to the communication partner device, receives an intermediate value calculated at the communication partner device, and executes secure calculation in which the received intermediate value is applied.

(11) The information processing device according to any one of (8) to (10),

in which the secure calculation processing unit executes secure calculation of generating a plurality of pieces of distributed information rc for acquiring a plurality of data value index values corresponding to a plurality of different data value examination criteria C1 to Cn for the input data D.

(12) The information processing device according to any one of (8) to (11),

in which the storage unit stores an access log in which data value examination request information from the communication partner device is recorded, and

the access log includes correspondence data of:

an identifier of one of a communication partner device which has made a data value examination request or a user of the communication partner device;

attribute name of data D which is made an examination target in the data value examination request; and

information transmitted to the communication partner device as a result of secure calculation based on the data value examination request.

(13) An information processing system which is a data processing system including a data providing device and a data collecting device which are able to perform communication with each other,

the data collecting device

generating distributed information rc for acquiring a data value index value which is a calculation result of a data value calculation function f(D, C) of input data D without disclosing the data value examination criterion C to the data providing device and without receiving the input data D at the data providing device from the data providing device, and transmitting the distributed information rc to the data providing device,

the data providing device

generating distributed information rp for acquiring the data value index value which is the calculation result of the data value calculation function f(D, C) of the input data D without disclosing the input data D to the data collecting device and without receiving the data value examination criterion C from the data collecting device, and

calculating the data value index value through operation processing in which the generated distributed information rp and the distributed information rc received from the data collecting device are applied.

(14) The information processing system according to (13),

in which the data collecting device generates a plurality of pieces of distributed information rc for acquiring a plurality of data value index values corresponding to a plurality of different data value examination criteria C1 to Cn for the input data D and transmits the plurality of pieces of distributed information rc to the data providing device, and

the data providing device

generates a plurality of pieces of distributed information rp for acquiring a plurality of data value index values corresponding to the data value examination criteria C1 to Cn and calculates the plurality of data value index values corresponding to the plurality of different data value examination criteria C1 to Cn through operation processing in which the generated plurality of pieces of distributed information rp and the plurality of pieces of distributed information rc received from the data collecting device are applied.

(15) An information processing method to be executed at an information processing device,

the information processing device including:

a data processing unit configured to calculate data value of input data D based on a data value examination criterion C; and
a communication unit configured to execute communication with a communication partner device,
in which the data processing unit includes
a secure calculation processing unit configured to execute secure calculation of calculating the data value of the input data D without disclosing the input data D to the communication partner device and without receiving the data value examination criterion C from the communication partner device,
the secure calculation processing unit
generates distributed information Dc which is converted data of the input data D and transmits the distributed information Dc to the communication partner device,
receives input of distributed information Cp which is converted data of the data value examination criterion C, from the communication partner device, and
executes secure calculation accompanied by communication with the communication partner device to acquire a data value index value which is a calculation result of a data value calculation function f(D, C) of the input data D.

(16) An information processing method to be executed at an information processing device,
the information processing device including:

a storage unit configured to store a data value examination criterion C; and
a communication unit configured to execute communication with a communication partner device,
in which the data processing unit includes
a secure calculation processing unit configured to execute secure calculation of calculating data value of input data D without disclosing the data value examination criterion C to the communication partner device and without receiving the input data D at the communication partner device from the communication partner device, and
the secure calculation processing unit
generates distributed information Cp which is converted data of the data value examination criterion C and transmits the distributed information Cp to the communication partner device,
receives input of distributed information Dc which is converted data of the input data D, from the communication partner device, and
executes secure calculation accompanied by communication with the communication partner device to generate distributed information rc for acquiring a data value index value which is a calculation result of a data value calculation function f(D, C) of the input data D and transmits the distributed information rc to the communication partner device.

(17) A program for causing information processing to be executed at an information processing device,
the information processing device including:

a data processing unit configured to calculate data value of input data D based on a data value examination criterion C; and
a communication unit configured to execute communication with a communication partner device,
in which the data processing unit includes
a secure calculation processing unit configured to execute secure calculation of calculating data value of the input data D without disclosing the input data D to the communication partner device and without receiving the data value examination criterion C from the communication partner device,
the program causes the secure calculation processing unit to execute:
processing of generating distributed information Dc which is converted data of the input data D and transmitting the distributed information Dc to the communication partner device;
processing of receiving input of distributed information Cp which is converted data of the data value examination criterion C, from the communication partner device; and
processing of executing secure calculation accompanied by communication with the communication partner device to acquire a data value index value which is a calculation result of a data value calculation function f(D, C) of the input data D.

(18) A program for causing information processing to be executed at an information processing device,
the information processing device including:

a storage unit configured to store a data value examination criterion C; and
a communication unit configured to execute communication with a communication partner device,
in which the data processing unit includes

a secure calculation processing unit configured to execute secure calculation of calculating data value of input data D without disclosing the data value examination criterion C to the communication partner device and without receiving the input data D at the communication partner device from the communication partner device, and the program causes the secure calculation processing unit to execute:

processing of generating distributed information Cp which is converted data of the data value examination criterion C and transmitting the distributed information Cp to the communication partner device;
processing of receiving input of distributed information Dc which is converted data of the input data D, from the communication partner device; and
processing of executing secure calculation accompanied by communication with the communication partner device to generate distributed information rc for acquiring a data value index value which is a calculation result of a data value calculation function f(D, C) of the input data D and transmitting the distributed information rc to the communication partner device.

Further, the series of processes described in the present specification can be executed by hardware, software, or a combination configuration of hardware and software. In a case where the process is executed by software, a program in which a processing sequence is recorded can be installed in a memory in a computer embedded in dedicated hardware to be executed or the program can be installed in a general computer capable of executing various processes to be executed. For example, the program can be recorded in advance in a recording medium. The program can be installed in a computer from the recording medium, and the program can also be received via a network such as a local area network (LAN) or the Internet and can be installed in a recording medium such as an internal hard disk.

Note that the various processes described in the present specification can be executed chronologically according to the description and can also be executed in parallel or individually according to the processing performance of an device executing the processing or as necessary. Further, a system in the present specification is a logical set configuration of a plurality of devices and is not limited to a case in which each configuration is in the same casing.

INDUSTRIAL APPLICABILITY

As described above, according to a configuration in one example of the present disclosure, a configuration where value based on a data value examination criterion C of data D is determined through secure calculation without the input data D and the data value examination criterion C being disclosed to each other is realized.

Specifically, for example, secure calculation is executed without a data providing device disclosing the input data D to a data collecting device, and further, without the data collecting device disclosing the data value examination criterion C to the data providing device. The data providing device generates one piece of distributed information rp of a data value index value which is a calculation value of a data value calculation function f(D, C) of the input data D through secure calculation and calculates the data value index value through operation of the generated distributed information rp and another piece of distributed information rc of the data value index value received from the data collecting device.

According to the present configuration, a configuration where value based on a data value examination criterion C of data D is determined through secure calculation without the input data D and the data value examination criterion C being disclosed to each other, is realized.

REFERENCE SIGNS LIST

10      Data providing device
20      Data collecting device
30      Data utilizing device
100     Data providing device
101     Communication unit
102     Input unit
103     Data processing unit
104     Output unit
105     Storage unit
111     Examination requesting unit
112     Secure calculation processing unit
113     Examination criterion updating processing unit

| 200 | Data collecting device |
|---|---|
| 201 | Communication unit |
| 202 | Data processing unit |
| 203 | Storage unit |
| 211 | Examination request processing unit |
| 212 | Secure calculation processing unit |
| 213 | Examination criterion updating notifying unit |
| 401 | CPU |
| 402 | ROM |
| 403 | RAM |
| 404 | Bus |
| 405 | Input/output interface |
| 406 | Input unit |
| 407 | Output unit |
| 408 | Storage unit |
| 409 | Communication unit |
| 410 | Drive |
| 411 | Removable medium |

**Claims**

1. An information processing device comprising:

a data processing unit configured to calculate data value of input data D based on a data value examination criterion C; and
a communication unit configured to execute communication with a communication partner device,
wherein the data processing unit comprises
a secure calculation processing unit configured to execute secure calculation of calculating the data value of the input data D without disclosing the input data D to the communication partner device and without receiving the data value examination criterion C from the communication partner device,
the secure calculation processing unit generates distributed information Dc which is converted data of the input data D and transmits the distributed information Dc to the communication partner device,
receives input of distributed information Cp which is converted data of the data value examination criterion C from the communication partner device, and
executes secure calculation accompanied by communication with the communication partner device to acquire a data value index value which is a calculation result of a data value calculation function f(D, C) of the input data D.

2. The information processing device according to claim 1,
wherein the secure calculation processing unit generates two pieces of distributed information Dc and Dp which are converted data of the input data D,
receives input of one piece of distributed information Cp out of two pieces of distributed information Cp and Cc which are converted data of the data value examination criterion C generated by the communication partner device, from the communication partner device, and
executes secure calculation utilizing the two pieces of distributed information Dc and Dp of the input data D and the distributed information Cp of the data value examination criterion C to acquire the data value index value which is the calculation result of the data value calculation function f(D, C) of the input data D.

3. The information processing device according to claim 1,
wherein the secure calculation processing unit transmits an intermediate value calculated in process of secure calculation to the communication partner device, receives an intermediate value calculated at the communication partner device, and executes secure calculation in which the received intermediate value is applied.

4. The information processing device according to claim 1,
wherein the secure calculation processing unit calculates one piece of distributed information rp out of two pieces of distributed information rp and rc constituting the data value index value at an own device, receives the other piece of distributed information rc from the communication partner device, and calculates the data value index value through operation processing in which the two pieces of distributed information rp and rc constituting the data value

37

index value are applied,

as processing of acquiring the data value index value which is the calculation result of the data value calculation function f(D, C) of the input data D.

5. The information processing device according to claim 1,
wherein the secure calculation processing unit executes secure calculation of acquiring a plurality of data value index values corresponding to a plurality of different data value examination criteria C1 to Cn for the input data D.

6. The information processing device according to claim 1,
wherein the information processing device comprises a storage unit configured to store a plurality of data value index values corresponding to a plurality of different data value examination criteria C1 to Cn.

7. The information processing device according to claim 6,
wherein, in a case where the data processing unit receives a notification of updating of a data value examination criterion from the communication partner device,
the data processing unit acquires a data value index value corresponding to the updated data value examination criterion from the storage unit.

8. An information processing device comprising:

a storage unit configured to store a data value examination criterion C; and
a communication unit configured to execute communication with a communication partner device,
wherein the data processing unit comprises
a secure calculation processing unit configured to execute secure calculation of calculating data value of input data D without disclosing the data value examination criterion C to the communication partner device and without receiving the input data D at the communication partner device from the communication partner device, and
the secure calculation processing unit generates distributed information Cp which is converted data of the data value examination criterion C and transmits the distributed information Cp to the communication partner device, receives input of distributed information Dc which is converted data of the input data D, from the communication partner device, and
executes secure calculation accompanied by communication with the communication partner device to generate distributed information rc for acquiring a data value index value which is a calculation result of a data value calculation function f(D, C) of the input data D, and transmits the distributed information rc to the communication partner device.

9. The information processing device according to claim 8,
wherein the secure calculation processing unit generates two pieces of distributed information Cp and Cc which are converted data of the data value examination criterion C,
receives input of one piece of distributed information Dc out of two pieces of distributed information Dc and Dp which are converted data of the input data D, from the communication partner device, and
executes secure calculation utilizing the two pieces of distributed information Cp and Cc which are converted data of the data value examination criterion C and the distributed information Dc of the input data D to generate distributed information rc for acquiring the data value index value which is the calculation result of the data value calculation function f(D, C) of the input data D.

10. The information processing device according to claim 8,
wherein the secure calculation processing unit transmits an intermediate value calculated in process of secure calculation to the communication partner device, receives an intermediate value calculated at the communication partner device, and executes secure calculation in which the received intermediate value is applied.

11. The information processing device according to claim 8,
wherein the secure calculation processing unit executes secure calculation of generating a plurality of pieces of distributed information rc for acquiring a plurality of data value index values corresponding to a plurality of different data value examination criteria C1 to Cn for the input data D.

12. The information processing device according to claim 8,
wherein the storage unit stores an access log in which data value examination request information from the communication partner device is recorded, and

the access log includes correspondence data of:

> an identifier of one of a communication partner device which has made a data value examination request or a user of the communication partner device;
> attribute name of data D which is made an examination target in the data value examination request; and information transmitted to the communication partner device as a result of secure calculation based on the data value examination request.

**13.** An information processing system which is a data processing system including a data providing device and a data collecting device which are able to perform communication with each other,
the data collecting device
generating distributed information rc for acquiring a data value index value which is a calculation result of a data value calculation function f(D, C) of input data D without disclosing the data value examination criterion C to the data providing device and without receiving the input data D at the data providing device from the data providing device, and transmitting the distributed information rc to the data providing device,
the data providing device
generating distributed information rp for acquiring the data value index value which is the calculation result of the data value calculation function f(D, C) of the input data D without disclosing the input data D to the data collecting device and without receiving the data value examination criterion C from the data collecting device, and calculating the data value index value through operation processing in which the generated distributed information rp and the distributed information rc received from the data collecting device are applied.

**14.** The information processing system according to claim 13,
wherein the data collecting device generates a plurality of pieces of distributed information rc for acquiring a plurality of data value index values corresponding to a plurality of different data value examination criteria C1 to Cn for the input data D and transmits the plurality of pieces of distributed information rc to the data providing device, and
the data providing device
generates a plurality of pieces of distributed information rp for acquiring a plurality of data value index values corresponding to the data value examination criteria C1 to Cn and calculates the plurality of data value index values corresponding to the plurality of different data value examination criteria C1 to Cn through operation processing in which the generated plurality of pieces of distributed information rp and the plurality of pieces of distributed information rc received from the data collecting device are applied.

**15.** An information processing method to be executed at an information processing device,
the information processing device comprising:

> a data processing unit configured to calculate data value of input data D based on a data value examination criterion C; and
> a communication unit configured to execute communication with a communication partner device,
> wherein the data processing unit comprises
> a secure calculation processing unit configured to execute secure calculation of calculating the data value of the input data D without disclosing the input data D to the communication partner device and without receiving the data value examination criterion C from the communication partner device,
> the secure calculation processing unit
> generates distributed information Dc which is converted data of the input data D and transmits the distributed information Dc to the communication partner device,
> receives input of distributed information Cp which is converted data of the data value examination criterion C, from the communication partner device, and
> executes secure calculation accompanied by communication with the communication partner device to acquire a data value index value which is a calculation result of a data value calculation function f(D, C) of the input data D.

**16.** An information processing method to be executed at an information processing device,
the information processing device comprising:

> a storage unit configured to store a data value examination criterion C; and
> a communication unit configured to execute communication with a communication partner device,
> wherein the data processing unit comprises
> a secure calculation processing unit configured to execute secure calculation of calculating data value of input data D without disclosing the data value examination criterion C to the communication partner device and without receiving the input data D at the communication partner device from the communication partner device, and the secure calculation processing unit

generates distributed information Cp which is converted data of the data value examination criterion C and transmits the distributed information Cp to the communication partner device,

receives input of distributed information Dc which is converted data of the input data D, from the communication partner device, and

executes secure calculation accompanied by communication with the communication partner device to generate distributed information rc for acquiring a data value index value which is a calculation result of a data value calculation function f(D, C) of the input data D and transmits the distributed information rc to the communication partner device.

17. A program for causing information processing to be executed at an information processing device, the information processing device comprising:

> a data processing unit configured to calculate data value of input data D based on a data value examination criterion C; and
> a communication unit configured to execute communication with a communication partner device,
> wherein the data processing unit comprises
> a secure calculation processing unit configured to execute secure calculation of calculating data value of the input data D without disclosing the input data D to the communication partner device and without receiving the data value examination criterion C from the communication partner device,
> the program causes the secure calculation processing unit to execute:

>> processing of generating distributed information Dc which is converted data of the input data D and transmitting the distributed information Dc to the communication partner device;
>> processing of receiving input of distributed information Cp which is converted data of the data value examination criterion C, from the communication partner device; and
>> processing of executing secure calculation accompanied by communication with the communication partner device to acquire a data value index value which is a calculation result of a data value calculation function f(D, C) of the input data D.

18. A program for causing information processing to be executed at an information processing device, the information processing device comprising:

> a storage unit configured to store a data value examination criterion C; and
> a communication unit configured to execute communication with a communication partner device,
> wherein the data processing unit comprises
> a secure calculation processing unit configured to execute secure calculation of calculating data value of input data D without disclosing the data value examination criterion C to the communication partner device and without receiving the input data D at the communication partner device from the communication partner device, and
> the program causes the secure calculation processing unit to execute:

>> processing of generating distributed information Cp which is converted data of the data value examination criterion C and transmitting the distributed information Cp to the communication partner device;
>> processing of receiving input of distributed information Dc which is converted data of the input data D, from the communication partner device; and
>> processing of executing secure calculation accompanied by communication with the communication partner device to generate distributed information rc for acquiring a data value index value which is a calculation result of a data value calculation function f(D, C) of the input data D and transmitting the distributed information rc to the communication partner device.

# FIG. 1

DATA PROVIDING DEVICE — 10

DATA PROVIDING USER

10a

10b

10c

10d

S11 DATA PROVIDING PROCESSING

DATA COLLECTING DEVICE — 20

S12 DATA SELLING PROCESSING

DATA UTILIZING DEVICE — 30

DATA UTILIZING ORGANIZATION (COMPANY)

30p

30q

30r

## FIG. 2

EP 3 660 778 A1

INFORMATION INPUT PAGE

| RETURN | NEXT |

(1) SEX:　　MALE ○　FEMALE ○

(2) AGE: [_____] ▲▼ YEARS OLD

(3) ADDRESS: POST CODE
[_____]

PREFECTURE
[_____] ▲▼

WARD, TOWN, VILLAGE
[_____]

STREET NUMBER
[_____]

(4) NAME OF PLACE OF EMPLOYMENT: [_____]

(5) ANNUAL INCOME: [_____]

(6) EDUCATIONAL BACKGROUND: [_____]

(7) HOBBY: [_____]

(8) BODY HEIGHT: [_____]

(9) BODY WEIGHT: [_____]

(10) PREVIOUS DISEASE: [_____]

(11) BLOOD PRESSURE: [_____]

| TRANSMIT |

*FIG. 3*

DATA PROVIDING DEVICE

DATA PROVIDING USER

10a

10b

10c

10d

10

S22 PROFIT RETURNING PROCESSING

20

DATA COLLECTING DEVICE

S21 PROFIT RETURNING PROCESSING

30

DATA UTILIZING DEVICE

DATA UTILIZING ORGANIZATION (COMPANY)

30p

30q

30r

EP 3 660 778 A1

## FIG. 4

DATA PROVIDING DEVICE — 10

DATA PROVIDING USER

10a

10b

10c

10d

S11
DATA PROVIDING PROCESSING

DATA 1

DATA 2

DATA 3

DATA 4

20

DATA COLLECTING DEVICE

VALUABLE

DATA 1 | DATA 2

VALUELESS

DATA 3 | DATA 4

EP 3 660 778 A1

# FIG. 5

DATA PROVIDING
DEVICE

DATA COLLECTING
DEVICE

| DATA PROVIDING DEVICE | | DATA COLLECTING DEVICE |
|---|---|---|
| DATA D | INPUT $(\mathrm{Input})$ | DATA VALUE EXAMINATION CRITERION c |
| $\downarrow$ | SECURE CALCULATION | $\downarrow$ |
| f(D, c) | OUTPUT $(\mathrm{Output})$ | NO |

$$f(D,c) = \begin{cases} 0 \ (\text{WHEN D DOES NOT SATISFY EXAMINATION CRITERION c}) \\ 1 \ (\text{WHEN D SATISFIES EXAMINATION CRITERION c}) \end{cases}$$

EP 3 660 778 A1

## FIG. 6

DATA PROVIDING DEVICE

DATA COLLECTING DEVICE

| DATA PROVIDING DEVICE | | DATA COLLECTING DEVICE |
|---|---|---|
| DATA D | INPUT $(\mathrm{Input})$ | DATA VALUE EXAMINATION CRITERION c |
| ↓ | SECURE CALCULATION | ↓ |
| f(D, c) | OUTPUT $(\mathrm{Output})$ | NO |

$f(D, c) = v$ (VALUE CALCULATED BASED ON EXAMINATION CRITERION c OF D)

$v = 0 \sim 1$

## FIG. 7

(a) EXAMPLE OF PROCESSING OF CALCULATING ADDITION RESULT OF SECURE DATA THROUGH SECURE CALCULATION

$$(X = x_1 + x_2) \quad (Y = y_1 + y_2)$$

**70**

DEVICE A

$(x_2), (y_2)$

$(x_2), (y_2)$ →

**S21a**

SECURE CALCULATION EXECUTING UNIT OF DEVICE A

$(x_2) + (y_2)$

**S22a**

SECURE CALCULATION EXECUTING UNIT OF DEVICE A

$((x_1) + (y_1) + (x_2) + (y_2)) \bmod m$
$= X + Y$

**S20**

**80**

DEVICE B

$(x_1), (y_1)$

$(x_1), (y_1)$ →

**S21b**

SECURE CALCULATION EXECUTING UNIT OF DEVICE B

$(x_1) + (y_1)$

**S22b**

SECURE CALCULATION EXECUTING UNIT OF DEVICE A

$((x_1) + (y_1) + (x_2) + (y_2)) \bmod m$
$= X + Y$

EP 3 660 778 A1

## FIG. 8

（b）EXAMPLE OF PROCESSING OF CALCULATING MULTIPLICATION RESULT OF SECURE DATA THROUGH SECURE CALCULATION

$$(X = x_1 + x_2) \quad (Y = y_1 + y_2)$$

**70**
DEVICE A
$(x_2), (y_2)$

S30

**80**
DEVICE B
$(x_1), (y_1)$

**S31a**
SECURE CALCULATION
EXECUTING UNIT OF DEVICE A
INPUT : $(x_2)$
OUTPUT : $(x_2) \times (y_1) + r$

**S32a**
SECURE CALCULATION
EXECUTING UNIT OF DEVICE A
INPUT : $(y_2)$
OUTPUT : $(x_1) \times (y_2) + r'$

**S33a**
SECURE CALCULATION
EXECUTING UNIT OF DEVICE A
$(x_2) \times (y_2) + (x_2) \times (y_1)$
$+ (x_1) \times (y_2) + r + r'$

1-out-of-m OT

1-out-of-m OT

**S31b**
SECURE CALCULATION
EXECUTING UNIT OF DEVICE B
INPUT : $i \times (y_1) + r$
$(i = 0, ..., m-1)$

**S32b**
SECURE CALCULATION
EXECUTING UNIT OF DEVICE B
INPUT : $i \times (x_1) + r'$
$(i = 0, ..., m-1)$

**S33b**
SECURE CALCULATION
EXECUTING UNIT OF DEVICE B
$(x_1) \times (y_1) - r - r'$

EP 3 660 778 A1

*FIG. 9*

EP 3 660 778 A1

# FIG. 10

# FIG. 11

"DATA VALUE EXAMINATION CRITERION 1(c1)"

|     | AGE (DATA D)      | VALUE (0, 1)    |
| --- | ----------------- | --------------- |
| (a) | 0~19, 40~100      | 0 (VALUELESS)   |
| (b) | 20~39             | 1 (VALUABLE)    |

EP 3 660 778 A1

# FIG. 12

"DATA VALUE EXAMINATION CRITERION 2(c2)"

|     | AGE (DATA D) | VALUE (v) |
| --- | --- | --- |
| (a) | 0〜19 | $0 |
| (b) | 20〜29 | $30 |
| (c) | 30〜39 | $50 |
| (d) | 40〜49 | $20 |
| (e) | 50〜 | $10 |

EP 3 660 778 A1

## FIG. 13

DATA PROVIDING DEVICE

DATA COLLECTING DEVICE

(S101) EXAMINATION REQUEST, ATTRIBUTE NAME OF PROVIDED DATA

NOTIFICATION AS TO WHETHER OR NOT THERE IS EXAMINATION CRITERION (S102)

$D = D_p \oplus D_c$

(S103) DISTRIBUTED INFORMATION $D_c$ OF DATA D

DISTRIBUTED INFORMATION $C_p$ OF EXAMINATION CRITERION C (S104)

$C = C_p \oplus C_c$

(S105-1) INTERMEDIATE CALCULATION VALUE $I_{s1}$

INTERMEDIATE CALCULATION VALUE $I_{s2}$ (S105-2)

INTERMEDIATE CALCULATION VALUE $I_{sk}$ (S105-k)

$g_p(I_{s1}, \dots, I_{sk}, I_{p1}, \dots, I_{pl}) = r_p$

$g_c(I_{s1}, \dots, I_{sk}, I_{c1}, \dots, I_{cm}) = r_c$

DISTRIBUTED INFORMATION $r_c$ OF EXAMINATION RESULT (S106)

$r_p \oplus r_c = f(D, C)$

EP 3 660 778 A1

# FIG. 14

200 DATA COLLECTING DEVICE

203

STORAGE UNIT

"EXAMINATION REQUEST ACCESS LOG"

| | ID OF DATA PROVIDING DEVICE (OR PROVIDER) | ATTRIBUTE NAME OF EXAMINATION REQUEST | RESPONSE INFORMATION |
|---|---|---|---|
| (1) | 00010245 | AGE | 01101111 |
| | | BODY WEIGHT | 01111100 |
| | | BLOOD PRESSURE | 10101000 |
| (2) | 00211323 | AGE | 10111010 |
| | | BODY HEIGHT | 00101100 |
| : | : | : | : |

EP 3 660 778 A1

## FIG. 15

DATA PROVIDING DEVICE                                                      DATA COLLECTING DEVICE

(S201) EXAMINATION REQUEST, ATTRIBUTE NAME OF PROVIDED DATA

NOTIFICATION AS TO WHETHER OR NOT THERE IS EXAMINATION CRITERION (S202)

$D = D_p \oplus D_c$

(S203) DISTRIBUTED INFORMATION $D_c$ OF DATA D

DISTRIBUTED INFORMATION $C_{1p}$, ..., $C_{np}$ OF EXAMINATION CRITERIA $C_1$, ..., $C_n$ (S204)

$C_i = C_{ip} \oplus C_{ic}$
$(i = 1, ..., n)$

(S205-1) INTERMEDIATE CALCULATION VALUE $I_{1s1}$, ..., $I_{ns1}$

INTERMEDIATE CALCULATION VALUE $I_{1s2}$, ..., $I_{ns2}$ (S205-2)

$\vdots$

INTERMEDIATE CALCULATION VALUE $I_{1sk}$, ..., $I_{nsk}$ (S205-k)

$g_p(I_{is1}, ..., I_{isk}, I_{ip1}, ..., I_{ipl}) = r_{ip}$
$(i = 1, ..., n)$

$g_c(I_{is1}, ..., I_{isk}, I_{ic1}, ..., I_{icm}) = r_{ic}$
$(i = 1, ..., n)$

DISTRIBUTED INFORMATION $r_{1c}$, ..., $r_{nc}$ OF EXAMINATION RESULT (S206)

$r_{ip} \oplus r_{ic} = f(D, C_i)$
$(i = 1, ..., n)$

EP 3 660 778 A1

# FIG. 16

DATA PROVIDING DEVICE                                    DATA COLLECTING DEVICE

EP 3 660 778 A1

(S301)
NOTIFICATION OF UPDATING OF EXAMINATION CRITERION
(EXAMINATION CRITERION IDENTIFIER j)

ACQUIRE $f(D, C_j)$ FROM STORAGE UNIT
AND DISPLAY $f(D, C_j)$

## FIG. 17

DATA PROVIDING DEVICE (100)

- COMMUNICATION UNIT (101)
- INPUT UNIT (102)
- DATA PROCESSING UNIT (103)
  - EXAMINATION REQUESTING UNIT (111)
  - SECURE CALCULATION PROCESSING UNIT (112)
  - EXAMINATION CRITERION UPDATING PROCESSING UNIT (113)
- OUTPUT UNIT (104)
- STORAGE UNIT (105)

DATA COLLECTING DEVICE (200)

EP 3 660 778 A1

## FIG. 18

EP 3 660 778 A1

## FIG. 19

Block diagram showing: CPU (401), ROM (402), RAM (403) connected via a bus (404) to an INPUT/OUTPUT INTERFACE (405). Connected to the interface are INPUT UNIT (406), OUTPUT UNIT (407), STORAGE UNIT (408), COMMUNICATION UNIT (409), and DRIVE (410). The DRIVE connects to REMOVABLE MEDIUM (411).

## INTERNATIONAL SEARCH REPORT

| International application No. |
|---|
| PCT/JP2018/023951 |

**A. CLASSIFICATION OF SUBJECT MATTER**
Int.Cl. G06Q50/10(2012.01)i

According to International Patent Classification (IPC) or to both national classification and IPC

**B. FIELDS SEARCHED**

Minimum documentation searched (classification system followed by classification symbols)
Int.Cl. G06Q10/00-99/00, G16H10/00-80/00, G09C1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-84134 A (OMRON CORP.) 18 May 2017, paragraphs [0040]-[0041], [0046]-[0047], [0055], [0060]-[0063], [0069] & WO 2017/073660 A1 | 1-18 |
| A | JP 2005-25663 A (NEC CORP.) 27 January 2005, paragraphs [0003], [0010], [0016], [0033], [0052] (Family: none) | 1-18 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 September 2018 (11.09.2018) | 18 September 2018 (18.09.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/023951

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-316965 A (OMRON CORP.) 07 November 2003, paragraphs [0047], [0050]-[0054], [0072]-[0078], [0081] (Family: none) | 1-18 |
| A | JP 2017-78985 A (FAS CONSULTING INC.) 27 April 2017, paragraphs [0023], [0028]-[0030], [0053]-[0057] (Family: none) | 1-18 |
| A | JP 2005-44280 A (JSL INC.) 17 February 2005, paragraphs [0008], [0017]-[0018], [0024]-[0030] (Family: none) | 1-18 |
| A | JP 2015-225447 A (TOPPAN FORMS CO., LTD.) 14 December 2015, paragraphs [0017], [0022]-[0024] (Family: none) | 1-18 |
| A | JP 2004-4341 A (TOSHIBA CORP.) 08 January 2004, paragraphs [0033]-[0043], [0068] (Family: none) | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002042012 A
- JP 2013164724 A
- JP 2015103111 A

**Non-patent literature cited in the description**

- **O. GOLDREICH ; S. MICALI ; A. WIGDERSON.** How to play any mental game. *STOC'87,* 1987, 218-229
- **O. GOLDREICH ; S. MICALI ; A. WIGDERSON.** How to play any mental game. *STOC'87,* 1987, 218, , 229